# EUROPEAN PATENT APPLICATION

(11) **EP 1 821 428 A1**
(43) Date of publication of application: **22.08.2007**
(21) Application number: 05741296.7
(22) Date of filing: 23.05.2005
(51) Int. Cl.: H04B 7/212, H04B 1/40

(54) **WIRELESS COMMUNICATION APPARATUS**

(30) Priority: 25.11.2004 JP 2004340730
(71) Applicant: KABUSHIKI KAISHA KOBE SEIKO SHO, Kobe-shi, Hyogo 651-8585 (JP)
(72) Inventor: FUKUMOTO, Yoshito, Kobe Corporate Res. Lab., Nishi-ku, Kobe-shi, Hyogo, 6512271 (JP); MANABE, Chitaka, Kobe Corporate Res. Lab., Nishi-ku, Kobe-shi, Hyogo, 6512271 (JP); GOTO, Yuichiro, Kobe Corporate Res. Lab., Nishi-ku, Kobe-shi, Hyogo, 6512271 (JP); IKEDA, Hideo, Kobe Corporate Res. Lab., Nishi-ku, Kobe-shi, Hyogo, 6512271 (JP); INOUE, Koji, Kobe Corporate Res. Lab., Nishi-ku, Kobe-shi, Hyogo, 6512271 (JP); KEGASA, Koyo, Kobe Corporate Res. Lab., Nishi-ku, Kobe-shi, Hyogo 6512271 (JP)
(74) Representative: Müller-Boré & Partner Patentanwälte
(86) International application number: PCT/JP2005/009320
(87) International publication number: WO 2006/057085

(57) **Abstract**

Existing modems of time division duplex (TDD) type can be utilized without modification to perform a high speed wireless communication with stable communication quality in other frequency bands such as quasi-millimeter to millimeter wave bands. There are included a circulator (11) connected to TDD modems (1, 2) and receives signals transmitted thereby to output those signals from a first connection terminal (p1) and outputs signals received at a second connection terminal (p2) to the TDD modems (1, 2), and a frequency converter (2a) that raise the frequency of the signals from the circulator (11) by a predetermined frequency width and lowers the frequency of signals from a receive antenna (32) by a predetermined frequency width. It may be arranged that the frequency conversion width be made different between the uplink and downlink and that a filter, which blocks the transmitting wireless frequency and passes the receiving wireless frequency, is provided between the receive antenna (32) and a frequency converter (22a).

## Description

### TECHNICAL FIELD

The present invention relates to a wireless communication device for relay transmission of communication signals transmitted and received by a time division multiduplexing type modem with a counterpart wireless communication device as wireless signals.

### BACKGROUND ART

In recent years, high frequency wireless communication systems for individuals as typified by mobile telephones and wireless LANs have been increasingly diffused. Although frequencies of radio waves (wireless frequencies) usable for wireless communication are allocated based on provisions of the law about radio wave, insufficiency of frequency bands at frequencies of approximately 10 GHz and below is currently becoming conspicuous.

For example, 2.4 GHz band wireless LAN systems utilize ISM (Industrial, Science, and Medical) band which is allocated to the 2.4 to 2.5 GHz (100 MHz bandwidth). In this bandwidth, a wireless LAN system conforming to IEEE 802. 11g with a maximum communication speed of 54 Mbps wireless can utilize only four channels independently without radio interference. The similar situation is applied to 5 GHz band wireless LANs, where wireless channels independently usable without radio interference are limited to several channels. It is apprehended that increase in number of users near feature will cause inefficient communication speed available for each of communication terminals due to limitations on the number of wireless channels.

In order to increase the speed of communication, it is theoretically possible to arrange a plurality of modems in parallel for multi-channel communication using a plurality of wireless channels. For example, two-channel communication of wireless channels conforming to the IEEE 802.11g can obtain communication speeds of up to a maximum 108 Mbps. However, in this case, the limited wireless channel frequency band is occupied by large number of channels, and thus there remains many problems for practical purposes.

On the other hand, in the quasi-millimeter to millimeter wave bands exceeding 10 GHz, broad frequency bands remain available. Within wireless communication frequencies in the quasi-millimeter to millimeter wave bands, 22 GHz band, 26 GHz band, and 38 GHz band have already been allocated to subscriber-line access (Fixed Wireless Access, FWA) for telecommunication businesses, and 18 GHz band is under preparation for allocation to public utility. Combining these bands enables to use extensive bandwidth totaling nearly 4 GHz.

Although depending on system configuration, quasi-millimeter to millimeter wave band wireless communication can normally achieve communication speed of several tens of Mbps to 100 Mbps and higher, which means that high-speed communication comparable to communication using optical fibers can be achieved by the wireless communications.

Thus, widespread adoption of broadband wireless communication systems which utilize the quasi-millimeter to millimeter wave band in wireless data communication can resolve the problem of deficiency of frequency bandwidth.

However, in conventional quasi-millimeter to millimeter wave band FWA systems, constituent elements (equipments) such as modem and high-frequency circuits are specialized items differing from the constituent elements of wireless LAN systems (2.4 GHz band, 5 GHz band). This disturbs effective usage (diversion for usage) of communication equipment for time division duplex (TDD) wireless LAN systems and manufacturing facilities thereof which are already widespread and costs for which have fallen considerably, casing complication in achieving conserved resources and lower costs, and thus diffusion of quasi-millimeter to millimeter wave band FWA systems.

Consequently, if the modems for wireless LAN systems, which are already widely diffused, are effectively utilized to configure wireless communication devices which convert the communication signals to the quasi-millimeter or millimeter wave band, then the conserved resources and the lowered costs can be achieved, resulting in promotion of diffusion of the quasi-millimeter to millimeter wave band FWA systems.

Conventionally, Patent Document 1 discloses, as means to effectively utilize existing wireless LAN modems, a millimeter wave band wireless communication system (Conventional Art Example 1) in which transmitting signals (2.4 GHz band, 5 GHz band) from a TDD master station modem (TDD modem) to a subscriber station modem (TDD modem) are subjected to frequency conversion to 60 GHz band for wireless transmission.

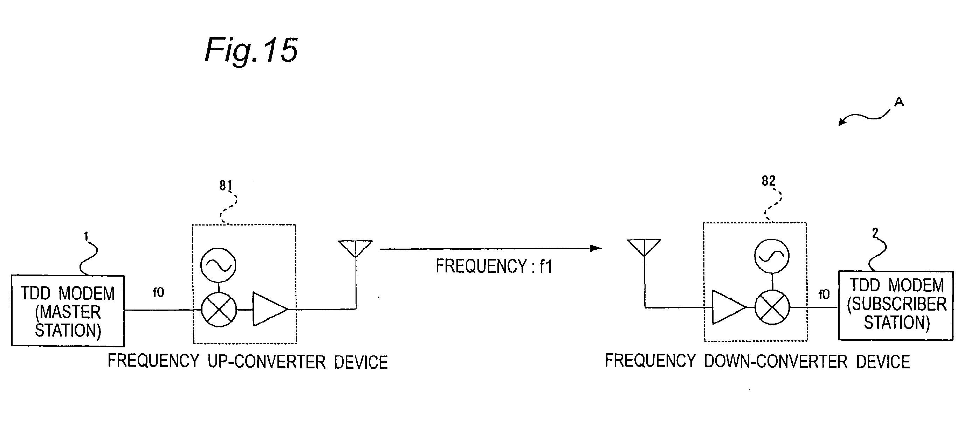

Fig. 15 schematically shows basic configuration of a wireless communication system "A" of Conventional Art Example 1 disclosed in Patent Document 1.

As shown in Fig. 15, in the wireless communication system "A" of Conventional Art Example 1, a master station modem 1 (TDD modem) is connected to a frequency up-converter device 81 which converts frequency of the transmitting signals from the modem frequency f0 (2.4 GHz band or 5 GHz band) to a millimeter wave band frequency f1, and a subscriber station modem 2 (TDD modem) is connected to a frequency down-converter device 82 which converts signals received by an antenna from the millimeter wave band frequency f1 to the modem frequency f0. This configuration would enable effective usage of the TDD modems for the wireless LAN and unidirectional wireless communication from the master station to the subscriber station in the millimeter bandwidth.

As another example of the conventional art, Non-patent Document 1 discloses a dual-band wireless LAN system (Conventional Art Example 2) in which the communication signals of a 5 GHz band wireless LAN are converted to the 25 GHz band.

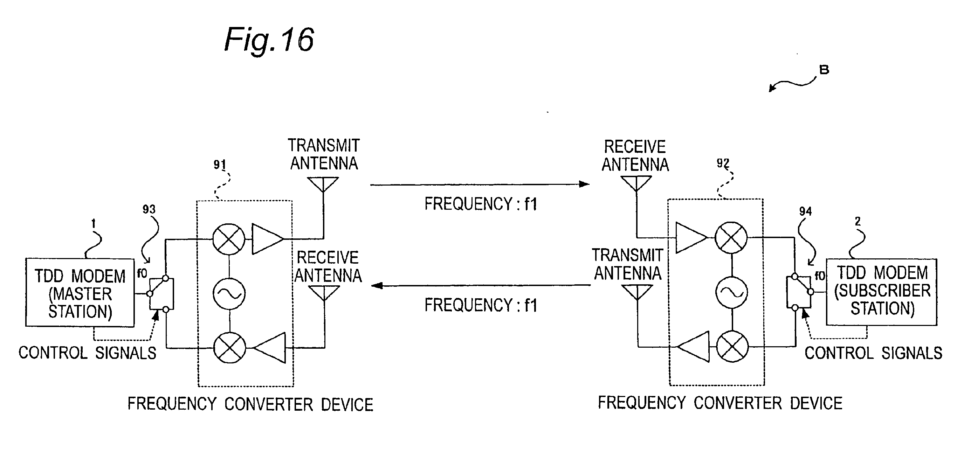

Fig. 16 schematically shows basic configuration of the wireless communication system "B" of Conventional Art Example 2 disclosed in Non-patent Document 1.

As shown in Fig. 16, in the wireless communication system "B" of Conventional Art Example 2, the TDD modems 1 and 2 on the master and subscriber station sides are respectively connected to frequency converter devices 91 and 92 which convert the communication signals (baseband signals) between a baseband signal frequency f0 (5 GHz band) and a quasi-millimeter wave band frequency f1 (25 GHz band) in both of the transmitting and receiving directions. Further, switches 93 and 94 are provided between the modems 1 and 2 and the frequency converter devices 91 and 92. These switches 93 and 94 switch the signal paths on the transmission and reception sides so as to be synchronized with the transmitting/receiving timing of TDD communication. This arrangement would enable effective usage of the basic functions of TDD modems for wireless LANs to achieve the wireless communication in the quasi-millimeter wave band.

[Patent document 1] Japan Patent Application Laid-open Publication No.2003-168986
[Non-patent document 1] "Communication Society Conference Preprints", B-5-173, Institute of Electronics, Information, and Communication Engineering, 2003

### DISCLOSURE OF INVENTION

### PROBLEM TO BE SOLVED BY THE INVENTION

However, in the configuration of Conventional Art Example 1, there is a problem that wireless transmission is only possible in the downlink direction (from the master station to the subscriber station). Further, even supposed to that the communication signals of the TDD modems 1 and 2 were merely divided, that an up-converter device is provided on the subscriber station side, and that a down-converter device is provided on the master station side for uplink transmission (from the subscriber station to the master station), there would be the problem that returning of transmitted signals or transmit power leakage to the reception side of the same station occurs to cause interference, and thus such a configuration would not be practical.

Further, in the configuration of Conventional Art Example 2, there is a problem that the effective usage of the existing TDD modems can not be achieved without modification because normal TDD models for the wireless LAN are not provide with line out functions necessary for taking out signals for switching transmitting/receiving timing in TDD communication Moreover, in case that the transmitted wave power level is high, insufficient isolation of signal switching by switches 93 and 94 disenables stable communication quality because the transmit power leakage to the reception side of the same station to cause saturation of amplifies arranged at reception side with respect to the frequency converter devices 91 and 92, or degradation of SN ratio of the baseband signal due to counter flowing of the returned signals through the switches 93 and 94.

Furthermore, in case that the plurality of modems are arranged in parallel and the plurality of channels are used for multi-channel transmission of wireless channels in order to increase communication speed, because the plurality of modem sets used in multi-channel communication (sets of master stations and subscriber stations) are respectively asynchronous, each of the modems during reception does not prevent other modems of the same station from transmitting. This causes problem where signals transmitted by the modems return to the other modems of the same station, casing saturation of amplifies arranged at reception side with respect to the frequency converters 91 and 92 or degradation of SN ration of the receiving signals and thus resulting in that stable communication quality can not be obtained.

Therefore, considering the above-mentioned circumstances, an object of the present invention is to provide, effectively utilizing without modification existing and widely used TDD modems for frequency bandwidths such as the 2.4 GHz band or 5 GHz band, a wireless communication device capable of performing wireless high speed (bidirectional) communication with stable communication quality in other frequency bandwidths such as the quasi-millimeter wave band to millimeter wave band, and capable of performing the wireless communication with stable communication even where the plurality of modems are arranged in parallel and the plurality of channels are used for multi-channel communication of wireless channels.

### MEANS FOR SOLVING THE PROBLEM

In order to achieve the above object, the present invention provides a wireless communication device for relay transmission of communication signals transmitted and received by a time division multiduplexing type modem with a counterpart wireless communication device as wireless signals, comprising, a first circulator connected to the modem so as to out put transmitting signals from the modem to one connection terminal, and outputting input signals from other connection terminal to the modem, transmission side frequency conversion means for rising frequencies of the output signals from said one connection terminal of the first circulator by a predetermined frequency width, and outputting the output signals, a transmit antenna for wireless transmission of the output signals from the transmission side frequency conversion means, a receive antenna for receiving wireless signals, and reception side frequency conversion means for lowering frequencies of the receiving signals by the receive antenna by a predetermined frequency width, and outputting the receiving signals to said other connection terminal of the first circulator.

This arrangement separates a path of the transmitting signals (modem → transmission side frequency conversion means → transmit antenna) and a path of the receiving signals (receive antenna → reception side frequency conversion means → modem) of the modem (TDD modem) are separated by the function of the first circulator, so that there is no need to take out control signals for signal path switching synchronous with TDD communication from the modem. Thus, existing TDD modems for frequency bands such as the 2.4 GHz band and 5 GHz band can be effectively utilized without modification, and wireless communication in frequency bands such as the quasi-millimeter wave band to millimeter wave band can be performed with stable communication quality.

The frequency conversion widths by the transmission side and reception side frequency conversion means can be set to either the same width or to different widths.

For example, the transmission side frequency conversion means and reception side frequency conversion means may share output signals from a single frequency oscillator to perform frequency conversion of the same frequency width. By this arrangement, wireless communication is performed in the same frequency band in both the uplink and the downlink directions.

This arrangement can reduce the number of frequency oscillators for outputting reference frequency signals for frequency conversion, resulting in simplified configuration, reduced size, and power saving. Further, the same frequency band of the transmission and reception principally does not cause that the transmitting signals return to the receiving path of the same station and interfere with the proper receiving signals from the counterpart side. This is because that although transmission and reception use the same frequency band, the modem performs transmitting/receiving timing using the TDD method.

On the other hand, the transmission side frequency conversion means and reception side frequency conversion means may respectively perform frequency conversions of different frequency widths, and the wireless communication device further may comprise reception side filter means interposed in a signal path from the receive antenna to the reception side frequency conversion means, the reception side filter means passing a predetermined receiving wireless frequency band of the receiving signals from the counterpart wireless communication device and cutting off a frequency band of the output signals from the transmission side frequency conversion means. In this arrangement, wireless communication is performed in different frequency bands in the uplink and downlink directions.

In essence, the circulator transmits high frequency signals input to one connection terminal among three connection terminals only to other predetermined connection terminal, but does not completely block signal transmission to the remaining other connection terminal. In general, the degree of isolation, which indicates the signal discrimination performance of the circulator, is approximately 25 dB, so that a signal equivalent to approximately 1/300 of the power of the input signal passes through the correct connection terminal (output terminal) and is output to the remaining connection terminal. For example, when measures to prevent returning of transmitting signals (radio wave) from the transmit antenna to the receive antenna or transmit power leakages are insufficient, i.e. the degree of coupling is 30 dB, a signal equivalent to 1/1000 of the power of the transmitting signal intrudes into the receiving signal path. In general, an amplifier to amplify receiving signals is provided in the signal path on the reception side. Thus, further considering the gain of this amplifier, there is the concern that returning of transmitting signals from a station, via the station's own receive antenna (or via a transmit/receive antenna), to the reception side signal path may occur, and that the signals may be amplified to a level which cannot be ignored, after which returning of the signals via the circulator to the transmission side signal path may result in signal interference.

However, by the above-mentioned arrangement, even when transmitting signals from a station are received by the receive antenna of the same station, intrusion of the signals thereinto is blocked by the reception side filter means, so that more reliably stable communication quality can be secured. Such a configuration is effective for securing good communication quality, even when returning of the transmitting signals to the receiving path produces the considerable noise due to increasing of the power level of the transmitting signals for extending transmitting distance of the wireless communications, and the TDD transmitting/receiving timings may shift and temporarily overlap.

Further, the transmit antenna and receive antenna may be provided as a single transmit/receive antenna, and the wireless communication device further may comprise a second circulator connected to the transmit/receive antenna, the second circulator receiving the output signals from the transmission side frequency conversion means to output the output signals to the transmit/receive antenna and outputting the input signals from the transmit/receive antenna to the reception side frequency conversion means.

In this arrangement, the transmitting signal path and receiving signal path on the antenna side are also isolated by the second circulator similarly to the modem side. Further, usage of only the single antenna attributes to simplified configuration and reduced size.

Further, when different frequency conversion widths (different wireless frequencies) are used in the transmitting and receiving directions, and the reception side filter means is used, the wireless communication device may comprise a plurality of the first circulators respectively connected respectively to a plurality of the modems, and the wireless communication device may further comprise combining means (output signal combining means) for combining the output signals from said one connection terminal of each of the first circulators and outputting the combined signals to the transmission side frequency conversion means and demultipexing means for distributing the output signals from the reception side frequency conversion means to said other connection terminal of each of the first circulators.

By this arrangement, a plurality of modems (TDD modems) can be arranged in parallel to perform multi-channel transmission of a wireless channel using a plurality of channels, to attain faster communication.

In this arrangement, each of the plurality of sets of modems (sets of a station and a counterpart station) being used in multi-channel transmission is asynchronous, so that when a modem is receiving, other modem in the same station may be transmitting. However, intrusion of the wireless transmitting signals from said other modem is blocked by the reception side filter means, so that transmitting/receiving signal interference is prevented, and wireless communication can be performed with stable communication quality.

Further, when a widely-used TDD modem (2.4 GHz band or 5 GHz band) for wireless LANs is employed, the transmission side frequency conversion means may convert frequencies in 2.4 GHz band or 5 GHz band to frequencies in millimeter wave band or quasi-millimeter wave band, and the reception side frequency conversion means may convert frequencies in the millimeter wave band or quasi-millimeter wave band into frequencies in the 2.4 GHz band or 5 GHz band.

In case that the frequency bands of the wireless transmitting signals and the wireless receiving signals are close so that portions of the signals in the two frequency bands (the peripheral portions of frequency wave forms) overlap, or that the transmitting and receiving signal frequency bands are the same, there is overlap of the frequency band to be passed and the frequency band to be blocked, and so returning of transmitting signals or transmit power leakage cannot be prevented by the reception side filter means. Further, even when not the overlapping region but a narrow gap exists between the two frequency bands, the filter characteristic of the reception side filter means must be sharp. This increases difficulties in and cost for design and manufacture of the filter. Thus, other than the reception side filter means, the following is also conceivable for reliably preventing signal interference due to returning of the transmitting signals of the same station.

For example, the wireless communication device may comprise transmitting signal detection means for detecting presence of the transmitting signals from the modem, and a reception side switch for switching between blocking and passing of signal flow through a signal path from the receive antenna or second circulator to the first circulator based on detection results by the transmitting signal detection means.

A TDD modem uses time division for switching between transmission and reception, and so when transmitting signals are detected by the transmitting signal detection means (during transmission), there is no need to perform reception; rather, reception should not be performed. Thus during transmission, the reception side switch provided in the receiving path is switched to the signal blocking side, and in other cases is switched to the signal passing side, so that during transmission, even if the station receives the transmitting signals of the same station, the signals are blocked by the reception side switch before reaching the first circulator, and so signal interference can be reliably prevented.

Further, the wireless communication device may comprise transmitting signal detection means for detecting presence of the transmitting signals from the modem, and reception side variable signal attenuation means for modifying a degree of attenuation of or for modifying whether to attenuate signals flowing in the signal path from the receive antenna or from the second circulator to the first circulator, based on detection results of said transmitting signal detection means.

In this arrangement, by means of the reception side variable signal attenuation means provided in the receiving path, switching is performed so that during transmitting signals are attenuated to a lower signal level, and in other cases are not attenuated or are hardly attenuated. This results in that advantageous results similar to those of the reception side switch are obtained.

In general, an amplifier (signal amplification means) is provided in the signal path of receiving signals, and usually the allowable input level of such amplifier is approximately -5 dB to 0 dB. In case that the degree of coupling between the transmit antenna and receive antenna is -20 dB, the level of signals radiated from the transmit antenna exceeding +20 dB may cause damages of the reception side amplifier.

Thus, the wireless communication device may further comprise receiving signal amplification means (amplifier) for amplifying the receiving signals prior to frequency conversion by the reception side frequency conversion means (processes for lowering the frequency), and the switching of signals by the reception side switch or the attenuation of the signals by the reception the variable signal attenuation means may be performed for the receiving signals prior to amplification by the receiving signal amplification means.

By this arrangement, when transmitting signals with high signal intensity return to the receive antenna (or to a transmit/receive antenna), damage to the receiving signal amplification means by the returning signals or transmit power leakages can be advantageously prevented.

Further, the wireless communication device may comprise transmitting signal detection means for detecting presence of the transmitting signals from the modem, and variable signal amplification means for modifying a degree of modification of or for modifying whether to amplify signals in the signal path from the receive antenna or from the second circulator to the first circulator, based on detection results of the transmitting signal detection means.

As described above, the amplifier to amplify receiving signals is generally provided in the reception side signal path. By changing the amplifier gain (degree of amplification) or by changing whether or not to perform amplification, and by not amplifying or amplifying hardly at all during transmission, and setting the gain to the gain normally required for signal reception at other times, advantageous results similar to those of the reception side switch can be obtained.

On the other hand, a configuration is also possible in which the signal interference due to returning of transmitting signals of the same station or transmit power leakage is addressed on the transmission side signal path.

For example, the wireless communication device may comprise transmitting signal detection means for detecting presence of the transmitting signals from the modem, and a transmission side switch which switches between blocking and passing of signals flowing in the signal path from the first circulator to the transmit antenna or to the second circulator, based on detection results of the transmitting signal detection means. Alternatively, the wireless communication device may further comprise transmitting signal detection means for detecting presence of the transmitting signals from the modem, and transmission side variable signal attenuation means for modifying a degree of attenuation of or for modifying whether to attenuate signals flowing in the signal path from the first circulator to the transmit antenna or to the second circulator, based on detection results of the transmitting signal detection means.

These arrangements can reliably prevent the signal interference similarly to the above-described cases where the measures are provide on the reception side, by switching a transmission side switch to signal blocking during transmission, or by attenuating the transmitting signal level using transmission side variable signal attenuation means,

Even during reception by the modem, signals due to thermal noise accumulated in the transmitting signal path can be amplified by the transmission side signal amplification means (amplifier) and radiated. If the radiated noise signals return to the reception side signal path, the noise floor on the reception side rises, so that the SN ratio is degraded.

Thus, the wireless communication device may comprise transmitting signal amplification means for amplifying the transmitting signals, and the switching of the signals by the transmission side switch or the attenuation of the signals by the transmission side variable signal attenuation means may be performed for the transmitting signals prior to amplification by the transmitting signal amplification means. This arrangement is advantageous in view of that signals due to thermal noise are not amplified and radiated from the transmit antenna, and increases in the reception side noise floor (degradation of the SN ratio) can be prevented.

Further, the transmitting signal detection means may be direct detection means which detects the presence of the transmitting signals from the modem by detecting whether or not intensity of the signals flowing in the signal path from the first circulator to the transmit antenna or to the second circulator exceeds a predetermined intensity.

Further, the wireless communication device may further comprise signal amplification means (power modification type signal amplification means) for amplifying the signals flowing in the signal path from the first circulator to the transmit antenna or to the second circulator, power consumption of the signal amplification means being modified according to the intensity of the signals to be amplified, and the transmitting signal detection means may be indirect detection means which detect the presence of the transmitting signals from the modem by detecting whether or not the power consumption of the power modification type amplification means exceeds a prescribed power.

Also, as a configuration to prevent damage to the reception side amplifier (signal amplification means) due to returning of transmitting signals of the same station or transmit power leakage, the following configuration may be used.

That is, the wireless communication may further comprise receiving signal dividing means for dividing the receiving signals from the receive antenna into a plurality of signals, divided signal amplification means for amplifying each of the plurality of divided signals divided by the receiving signal dividing means, and divided signal combining means for combining the plurality of divided signals after amplification by the divided signal amplification means, where the reception side frequency conversion means performs frequency conversion for the signals combined by the divided signal combining means.

By causing dividing into a plurality of signals of the receiving signals, the signal levels of each of the divided signals is low, and so the level of signals input to the reception side amplifier (divided signal amplification means) is suppressed, resulting in that damage to each amplifier can be prevented.

In addition, the wireless communication device may further comprise, burst signal detection means for detecting presence of burst signals either in a transmitting signal path from the first circulator to the transmit antenna or to the second circulator, or in a receiving signal path from the receive antenna or the second circulator to the first circulator; and signal intensity adjustment means for adjusting intensity of signals based on detection results of the burst signal detection means at a predetermined position in one of the transmitting signal path and receiving signal path located at downward side of a signal direction with respect to the burst signal detection means and/or at a predetermined position in the other of the transmitting signal path and receiving signal path.

In this case, the burst signal detection means may comprise signal attenuation means provided in a divided path from one of the transmitting signal path and receiving signal path, and detection means for detecting presence of the burst signals based on signal levels after passing through the signal attenuation means.

This arrangement achieves discrimination of the burst signals for communication to other noise signals, by setting the attenuation level of the signal attenuation means such that, when the original signals (signals divided from the signal path) of the signals input to the wave detection means (signals after attenuation) are transmitting burst signals or receiving burst signals, the wave detection means detects signals present, and when the signals are other signals (for example, wraparound signals from another signal path), the wave detection means detects no signal present.

Moreover, when the burst signals are detected by the burst signal detection means, the signal intensity adjustment means adjusts signal level in one of the transmitting signal path and receiving signal path other than that in which the burst signal is detected so as to lower the signal level, and then adjusts signal level in the other of the transmitting signal path and receiving signal path so at to rise the signal level with a delay. By this arrangement, noises due to returning of signals from the opposite signal path can be reliably prevented.

### EFFECT OF THE INVENTION

According to the invention, the path of the transmitting signals and the path of the receiving signals of the modem (TDD modem) are separated by the function of the circulator, so that there is no need to take out control signals for signal path switching synchronous with TDD communication from the modem. Thus, existing TDD modems can be effectively utilized without modification, and wireless communication in frequency bands such as the quasi-millimeter wave band to millimeter wave band can be performed with stable communication quality.

Further, in case that the transmission side frequency conversion means and reception side frequency conversion means share output signals from a single frequency oscillator to perform frequency conversion of the same frequency width, the number of frequency oscillators outputting reference frequency signals for frequency conversion can be reduced, resulting in simplified configuration, reduced size, and power saving.

On the other hand, in case that the transmission side frequency conversion means and reception side frequency conversion means respectively perform frequency conversions of different frequency widths, and the wireless communication device further comprises reception side filter means interposed in a signal path from the receive antenna to the reception side frequency conversion means, the reception side filter means passing a predetermined receiving wireless frequency band of the receiving signals from the counterpart wireless communication device and cutting off a frequency band of the output signals from the transmission side frequency conversion means, even when transmitting signals from a station are received by the receive antenna of the same station, intrusion of the signals thereinto is blocked by the reception side filter means, so that more reliably stable communication quality can be secured.

Further, in case that the transmit antenna and receive antenna is provided as a single transmit/receive antenna, and the wireless communication device further comprises a second circulator connected to the transmit/receive antenna, the second circulator receiving the output signals from the transmission side frequency conversion means to output the output signals to the transmit/receive antenna and outputting the input signals from the transmit/receive antenna to the reception side frequency conversion means, usage of only the single antenna attributes to simplified configuration and reduced size.

Moreover, in case that different frequency conversion widths (different wireless frequencies) are used in the transmitting and receiving directions, the reception side filter means is used, the wireless communication device comprises a plurality of the circulators respectively connected respectively to a plurality of the modems, and the wireless communication device comprises combining means (output signal combining means) for combining the output signals from said one connection terminal of each of the circulators and outputting the combined signals to the transmission side frequency conversion means and demultipexing means for distributing the output signals from the reception side frequency conversion means to said other connection terminal of each of the circulators, the plurality of TDD modems can be arranged in parallel to perform multi-channel transmission of wireless channel using a plurality of the channels, to attain faster communication.

Further, by detecting the presence of transmitting signals from the modem, and based on the detection result switching between blocking and passing signals flowing in the receiving signal path and transmitting signal path, or changing the degree of attenuation of the signals (or whether the signals are attenuated), or changing the degree of amplification of the signals (or whether the signals are amplified), even when isolation of transmitting signals and receiving signals is difficult using filter means, returning of the transmitting signals or transmit power leakage can be reliably prevented.

Further, by dividing receiving signals into a plurality of signals and using amplification means (an amplifier) to amplify the divided signals, and then coupling the plurality of divided signals after amplification and performing conversion to lower the signal frequency, the signal input levels to the amplification means of receiving signals can be suppressed, and damage to the amplification means due to returning of the transmitting signals of the station itself or transmit power leakage can be prevented.

### BRIEF DESCRIPTION OF THE DRAWINGS

Fig. 1 shows a schematic configuration view of a wireless communication system Z 1 having, as a constituent element, a wireless communication device X 1 according to a first embodiment of the present invention;
Fig. 2 shows a schematic configuration view of a wireless communication system Z2 having, as a constituent element, a wireless communication device X2 according to a second embodiment of the present invention;
Fig. 3 shows a schematic configuration view of a wireless communication system Z3 having, as a constituent element, a wireless communication device X3 according to a third embodiment of the present invention;
Fig. 4 shows a schematic configuration view of a wireless communication system Z4 having, as a constituent element, a wireless communication device X4 according to a fourth embodiment of the present invention;
Fig. 5 shows a schematic configuration view of a wireless communication system Z5, in which the wireless communication device X4 and the wireless communication device X2 are provided respectively as a master station and subscriber station;
Fig. 6 shows a schematic configuration view of a wireless communication device X5 according to a fifth embodiment of the present invention;
Fig. 7 shows a schematic configuration view of a wireless communication device X6 according to a sixth embodiment of the present invention;
Fig. 8 shows a schematic configuration view of a wireless communication device X7 according to a seventh embodiment of the present invention;
Fig. 9 shows a schematic configuration view of a wireless communication device X8 according to an eighth embodiment of the present invention;
Fig. 10 shows a schematic configuration view of a wireless communication device X9 according to a ninth embodiment of the present invention;
Fig. 11 shows a schematic configuration view of a wireless communication device X10 according to a tenth embodiment of the present invention;
Fig. 12 shows a schematic configuration view of a wireless communication device X11 according to an eleventh embodiment of the present invention;
Fig. 13 shows a schematic configuration view of a wireless communication device X12 according to a twelfth embodiment of the present invention;
Fig. 14 shows a schematic configuration view of a wireless communication device X 13 according to a thirteenth embodiment of the present invention;
Fig. 15 shows basic configuration of a wireless communication system "A" of Prior Art Example 1; and
Fig. 16 shows basic configuration of a wireless communication system "B" of Prior Art Example 2.

### DESCRIPTION OF REFERENCE NUMERALS

- 1:: master station side TDD modem
- 2:: subscriber station
- 11, 5:: circulator (first, second)
- 2a, 2b, 2av, 2ax, 2ay:: frequency converter
- 21a, 21b, 21av, 21aw, 21ax:: up-converter (transmission side frequency conversion means)
- 22a, 22b, 22av, 22aw, 22ax:: down-converter (reception side frequency conversion means)
- 23, 231, 232:: frequency oscillator
- 30:: transmit/receive antenna
- 31:: transmit antenna
- 32:: receive antenna
- 41: transmitting bandpass filter
- 42: receiving bandpass filter
- 50:: directional coupler
- 52:: comparator (transmitting signal detection means)
- 53:: variable attenuator (reception side variable signal attenuation means)
- 54: RF: switch (reception side switch)
- 55: I-V: converter (transmitting signal detection means)
- 61:: combiner
- 62:: divider
- 65:: burst signal detector
- 66:: control signal former
- 67:: transmission side signal intensity adjustment circuit
- 68:: reception side signal intensity adjustment circuit
- 67a, 68a:: FET switch
- 211, 221:: mixer
- 212x, 222x:: variable-gain amplifier

### BEST MODE FOR CARRYING OUT THE INVENTION

Embodiments of the invention are explained below, referring to the attached drawings, in order to facilitate an understanding of the invention. It should be noted that the following embodiments are specific examples of the invention, but do not limit the technical scope of the invention.

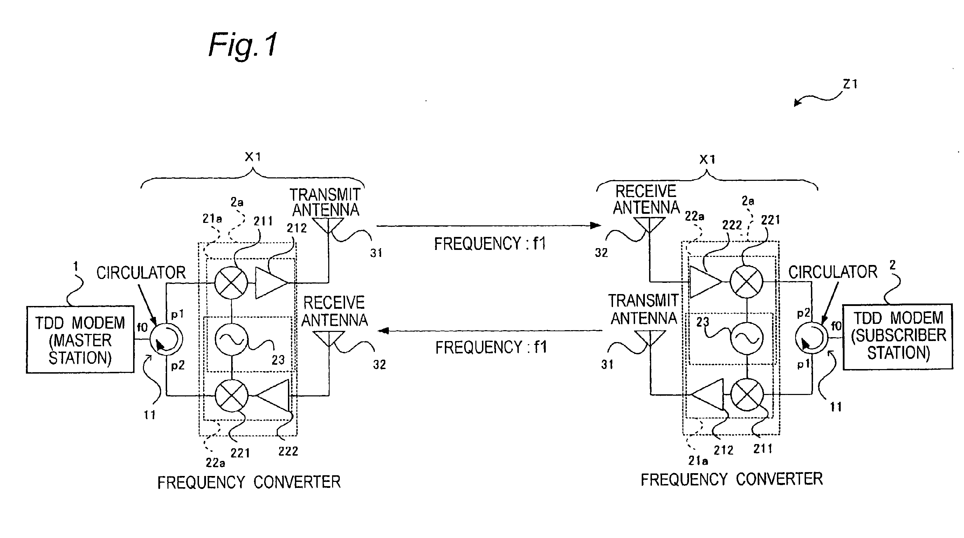

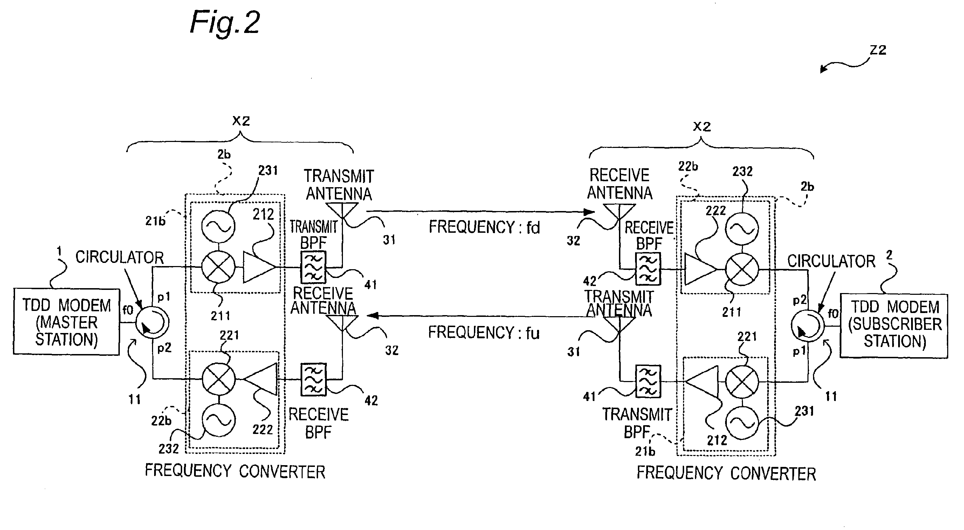

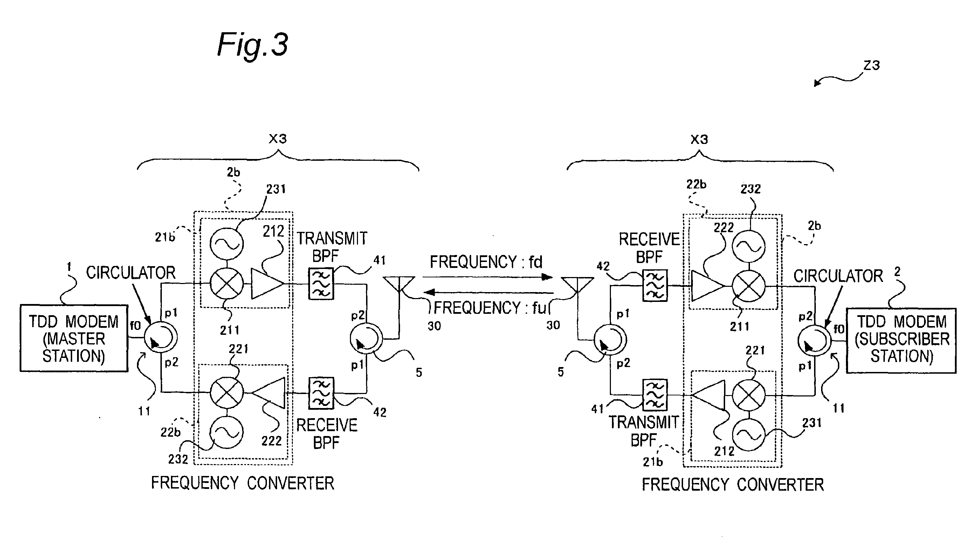

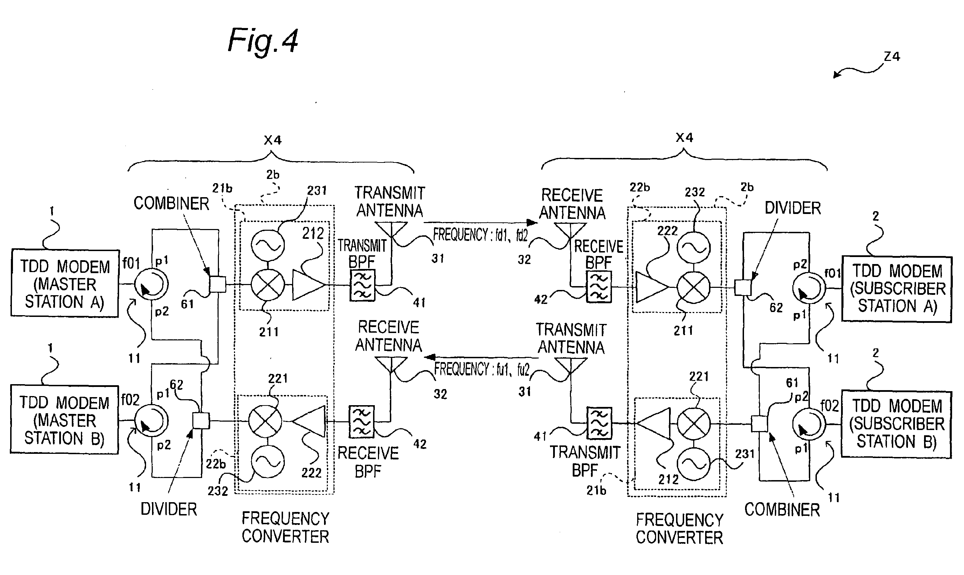

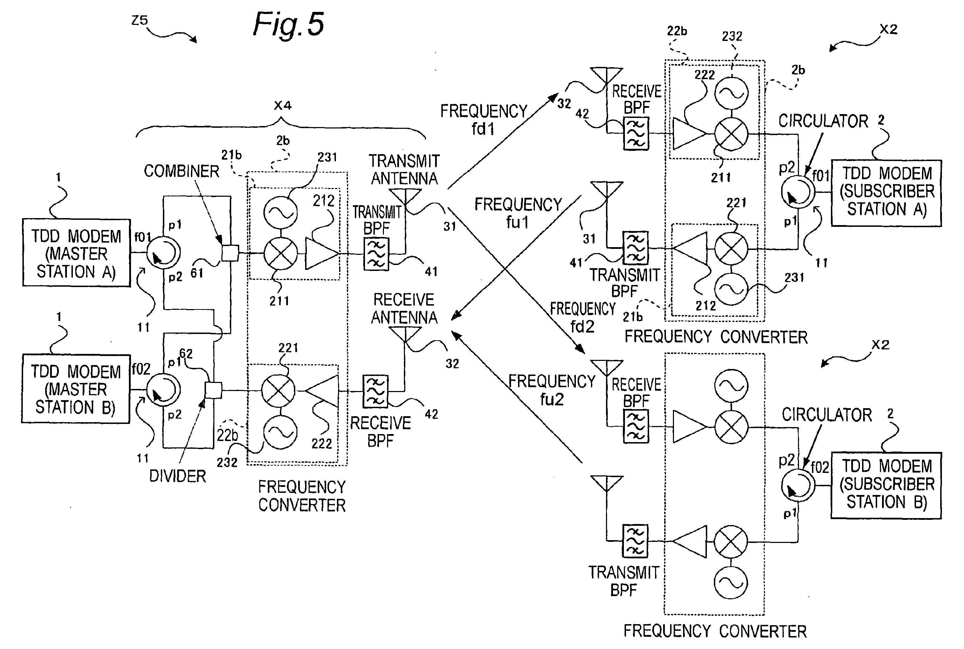

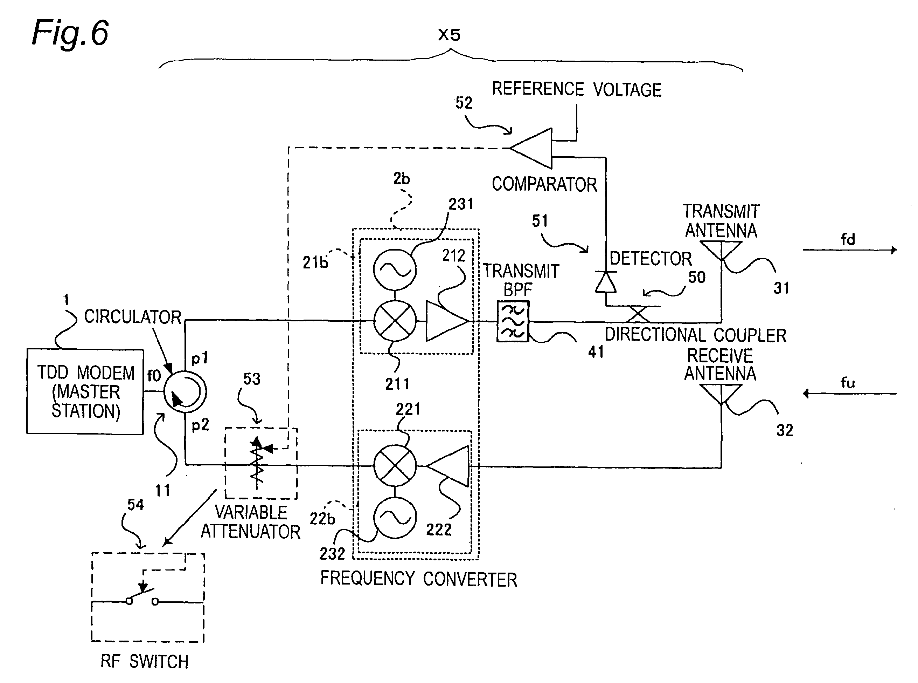

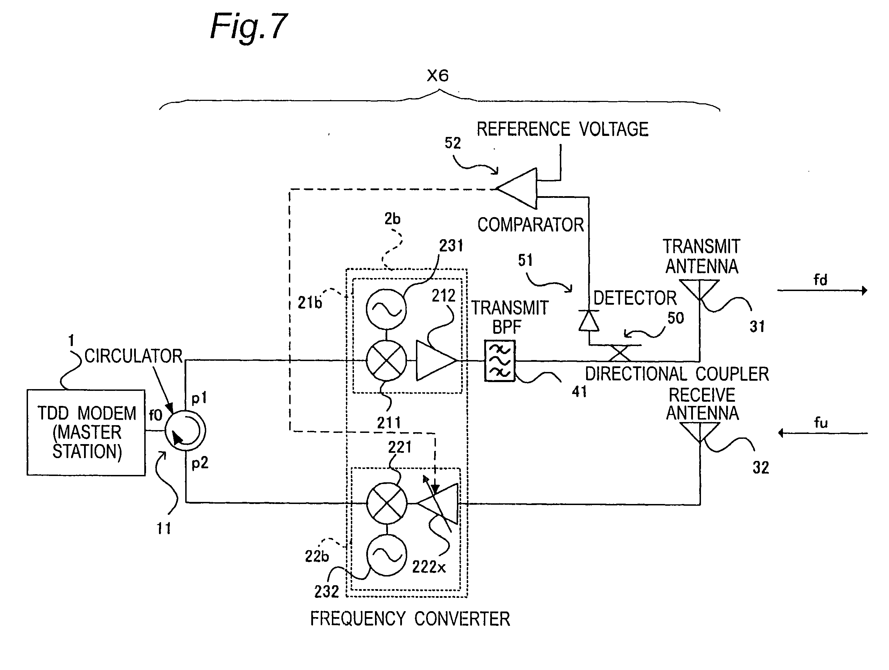

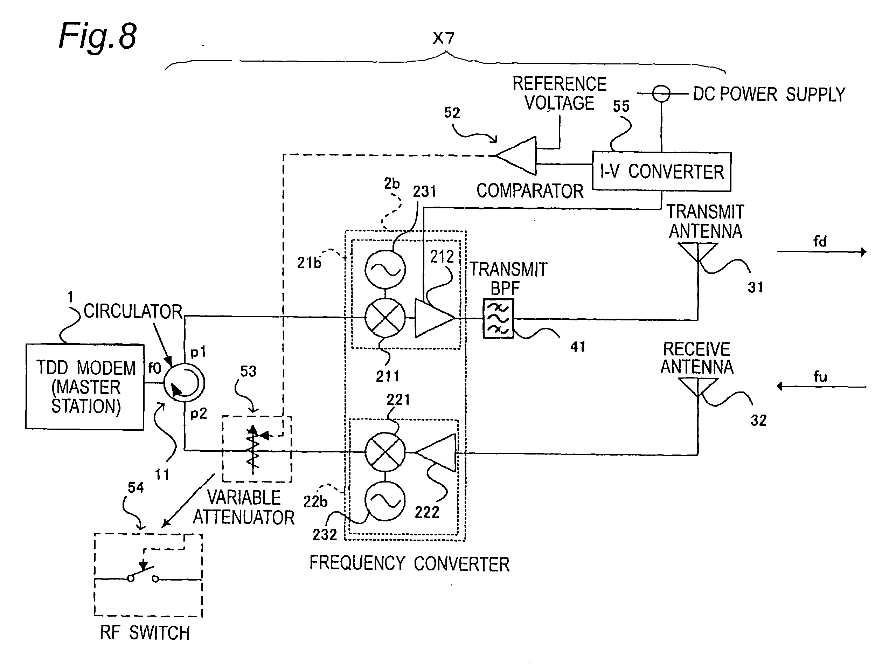

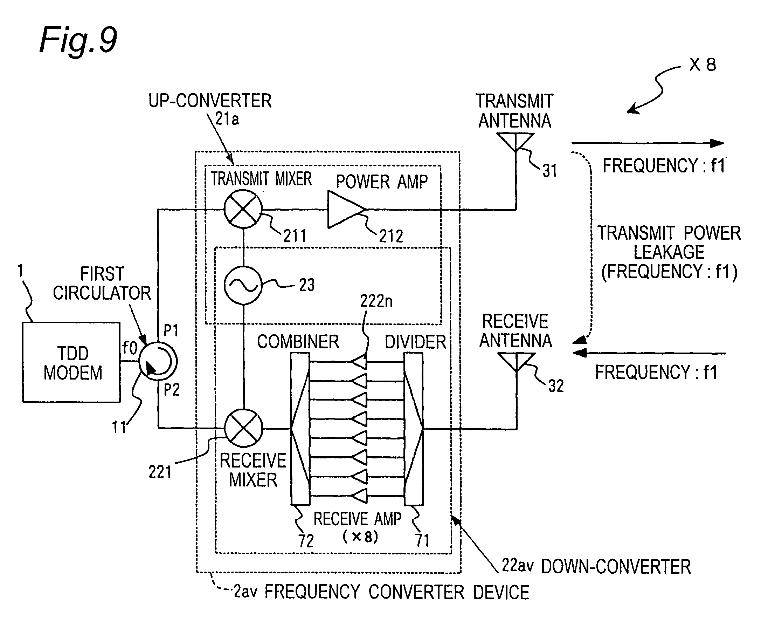

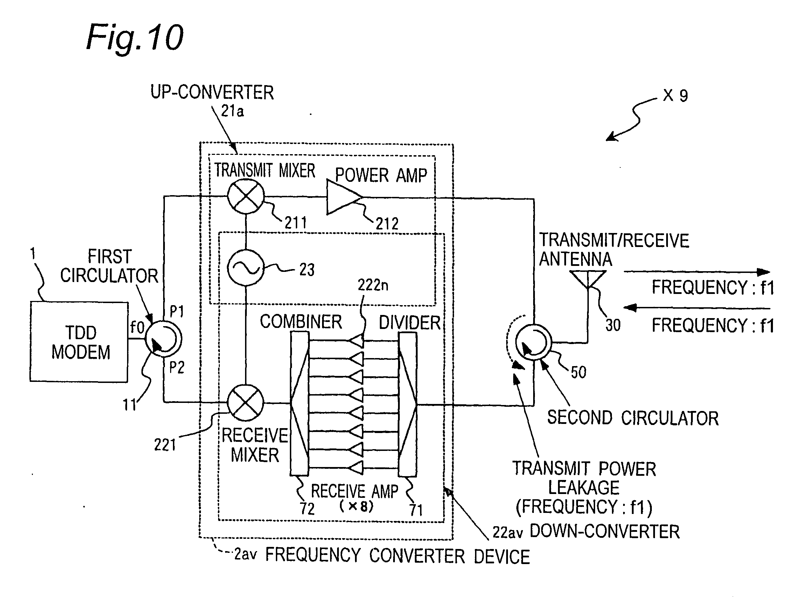

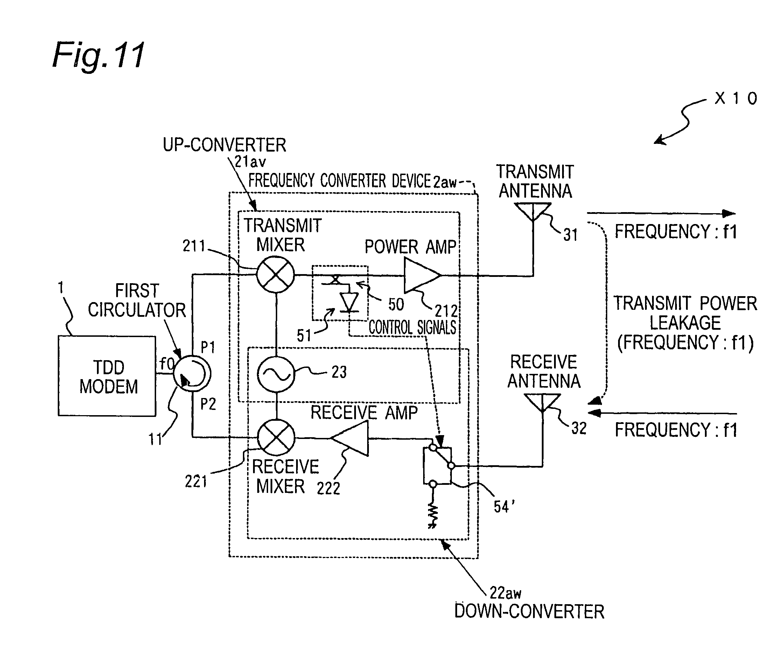

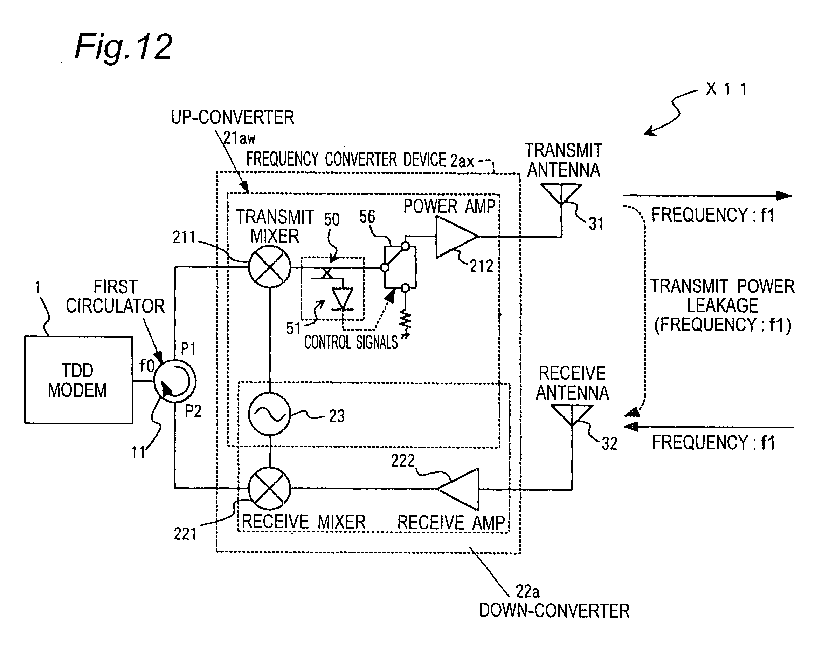

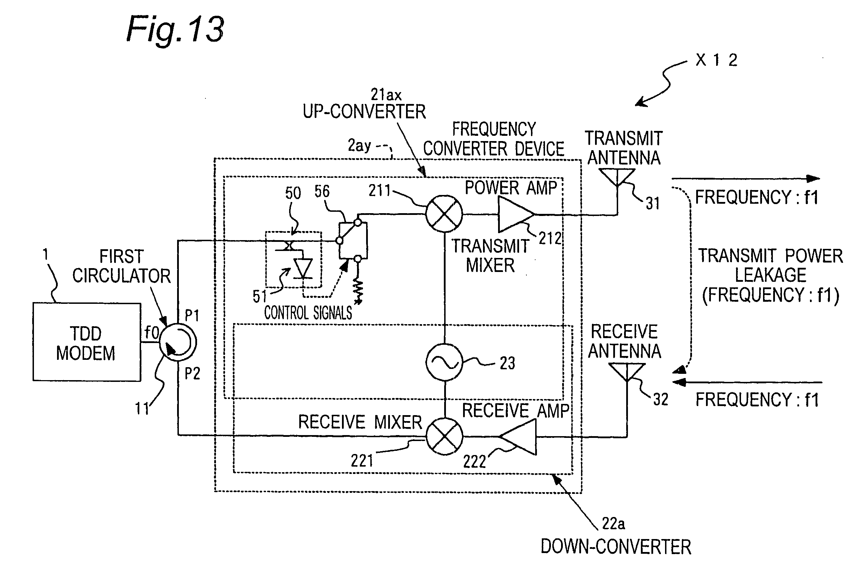

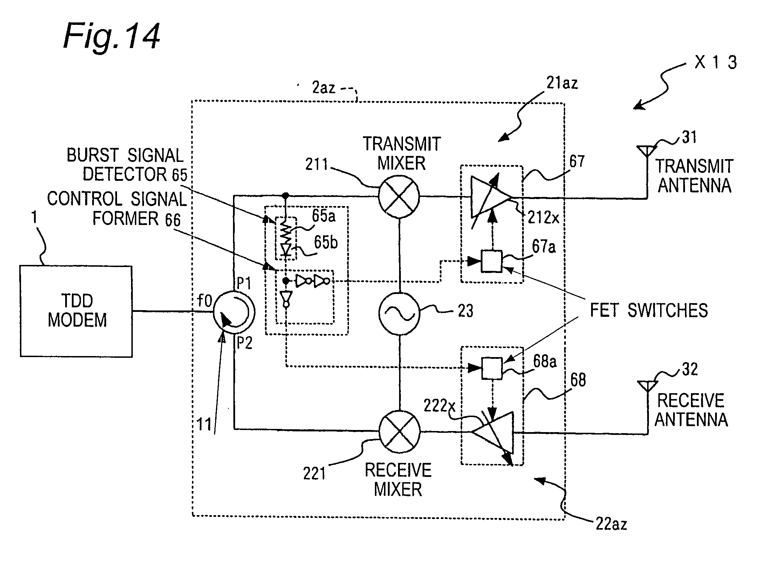

Here, Fig. 1 shows a schematic configuration view of a wireless communication system Z1 having, as a constituent element, a wireless communication device X 1 according to a first embodiment of the present invention, Fig. 2 shows a schematic configuration view of a wireless communication system Z2 having, as a constituent element, a wireless communication device X2 according to a second embodiment of the present invention, Fig. 3 shows a schematic configuration view of a wireless communication system Z3 having, as a constituent element, a wireless communication device X3 according to a third embodiment of the present invention, Fig. 4 shows a schematic configuration view of a wireless communication system Z4 having, as a constituent element, a wireless communication device X4 according to a fourth embodiment of the present invention, Fig. 5 shows a schematic configuration view of a wireless communication system Z5, in which the wireless communication device X4 and the wireless communication device X2 are provided respectively as a master station and subscriber station, Fig. 6 shows a schematic configuration view of a wireless communication device X5 according to a fifth embodiment of the present invention, Fig. 7 shows a schematic configuration view of a wireless communication device X6 according to a sixth embodiment of the present invention, Fig. 8 shows a schematic configuration view of a wireless communication device X7 according to a seventh embodiment of the present invention, Fig. 9 shows a schematic configuration view of a wireless communication device X8 according to an eighth embodiment of the present invention, Fig. 10 shows a schematic configuration view of a wireless communication device X9 according to a ninth embodiment of the present invention, Fig. 11 shows a schematic configuration view of a wireless communication device X10 according to a tenth embodiment of the present invention, Fig. 12 shows a schematic configuration view of a wireless communication device X11 according to an eleventh embodiment of the present invention, Fig. 13 shows a schematic configuration view of a wireless communication device X12 according to a twelfth embodiment of the present invention, and Fig. 14 shows a schematic configuration view of a wireless communication device X13 according to a thirteenth embodiment of the present invention.

### (First Embodiment)

First, a wireless communication device X 1 according to a first embodiment of the present invention and a wireless communication system Z 1 having the wireless communication device X 1 as a constituent element will be described with reference to the schematic configuration view of Fig. 1.

The wireless communication system Z1 comprises, on the master station side, a time division duplex (TDD) type modem, used in so-called wireless LANs, as the master station TDD modem 1, and a wireless communication device X1 connected thereto, and on the subscriber station side, a similar TDD-type modem as the subscriber station TDD modem 2, and a wireless communication device X 1 connected thereto. Although not shown, information processing device such as a personal computers are connected to each of the TDD modems 1 and 2 either directly or via communication equipment such as a HUB, and the TDD modems 1 and 2 perform modulation of transmitting signals and demodulation of receiving signals.

The wireless communication device X 1 relays transmitting signals at frequency f0 transmitted and received by the TDD modems 1 and 2 with a counterpart wireless communication device X1 as wireless signals f1. These are similarly applicable to the wireless communication devices X2 to X4 according to other embodiments described below.
The wireless communication system Z1 performs wireless communication in the same frequency band f1 in both the uplink and downlink directions.

As shown in Fig. 1, the wireless communication device X1 comprises a circulator 11, frequency converter 2a, transmit antenna 31, and receive antenna 32.

The circulator 11 (equivalent to the above mentioned first circulator) is connected to the TDD modem 1 or 2, and outputs transmitting signals input from TDD modem 1 or 2 to a first connection terminal p 1, and also outputs signals input from a second connection terminal p2 to the TDD modem 1 or 2.

The frequency converter 2a comprises an up-converter 21a (one example of the above-described transmission side frequency conversion means) which performs frequency conversion processing to raise the frequency of signals output from the first connection terminal p 1 of the circulator 11 by a predetermined frequency width (f1 - f0) and outputs the signals to the transmit antenna 31, and a down-converter 22a (one example of the above-described reception side frequency conversion means) which performs frequency conversion processing to lower the frequency f1 of receiving signals from the receive antenna 32 by a predetermined frequency width (f1 - f0) and output the signals to the second connection terminal p2 of the circulator 11 (first circulator). The up-converter 21a and down-converter 22a use a common frequency oscillator 23 which outputs reference frequency signals (reference signals) for use in frequency conversion.

The up-converter 21a (one example of the above-described transmission side frequency conversion means) comprises a mixer 211, a high-power amplifier 212 which amplifies the power of signals output from the mixer 211, and a (common) frequency oscillator 23. By mixing output signals from the frequency oscillator 23 with signals from the circulator 11, frequency conversion by a predetermined frequency width (up-conversion) is performed.

The down-converter 22a (one example of the above-described reception side frequency conversion means) comprises a low-noise amplifier 222 which amplifies input signals, a mixer 221, and the (common) frequency oscillator 23. By mixing the output signals from the frequency oscillator 23 with the output signals from the low-noise amplifier 222, frequency conversion by a predetermined frequency width (down-conversion) is performed.

In the frequency converter 2a, the up-converter 21a (transmission side frequency conversion means) and the down-converter 22a (reception side frequency conversion means) use in common reference signals output from the single frequency oscillator 23, and perform frequency conversion to change the frequency by the same frequency width (f1- f0) for the uplink and downlink. In the configuration shown in Fig. 1, the up-converter 21a and down-converter 22a use single-stage conversion for simplicity, however a configuration may be used in which conversion is in two or more stages (in series).

Further, the transmit antenna 31 performs wireless transmission of signals output from the up-converter 21 (transmission side frequency conversion means), and the receive antenna 32 receives wireless signals transmitted from the counterpart wireless communication device.

By means of the configuration shown in Fig. 1, the transmitting signal path of the TDD modems 1 and 2 (TDD modem 1, 2 → up-converter 21a → transmit antenna 31) and the receiving signal path (receive antenna 32 → down-converter 22a → TDD modem 1, 2) are isolated using the function of the circulator 11, so that there is no need to take out control signals for switching signal paths synchronously with TDD communication from the TDD modem 1 or 2. Thus existing TDD modems for the 2.4 GHz band or 5 GHz band (f0) can be effectively utilized without modification, and wireless communication in other frequency band (f1) such as the quasi-millimeter wave band to millimeter wave band can be performed with stable communication quality.

For example, when the TDD modems 1 and 2 use wireless signals in the 2.4 GHz band or 5 GHz band, used in wireless LANs, the oscillation frequency of the frequency oscillator 23 is set such that the up-converter 21a (transmission side frequency conversion means) converts the frequency from the 2.4 GHz band or 5 GHz band to the quasi-millimeter wave band or millimeter wave band. By the setting of the oscillation frequency, the down-converter 22a (reception side frequency conversion means) converts from the frequency from the millimeter wave band or quasi-millimeter wave band to the 2.4 GHz band or 5 GHz band.

Further, the frequency oscillator 23 which outputs the reference frequency signals for use in frequency conversion is used in common by the transmission side and the reception side, resulting in simplified configuration, reduced size, and power saving. Also, the same frequency band of the transmission and reception principally does not cause that the transmitting signals return to the receiving path of the same station and interfere with the proper receiving signals from the counterpart side. This is because that although transmission and reception use the same frequency band f1, the modem performs transmitting/receiving timing using the TDD method.

Upon actually connecting the master station side TDD modem 1 and subscriber station side TDD modem 2 to a network and conducting communication tests, the communication speed and error rate were substantially the same as when no frequency conversion was performed, and it was confirmed that satisfactory communication quality could be secured.

### (Second Embodiment)

Next, a wireless communication device X2 according to a second embodiment of the invention present invention, and a wireless communication system Z2 having the wireless communication device X2 as a constituent element will be described with reference to the schematic configuration view of Fig. 2. Here constituent elements which are the same as those in the wireless communication system Z 1 are assigned the same symbols.

The wireless communication system Z2 comprises, on the master station side, the master station TDD modem 1 and the wireless communication device X2 connected thereto, and on the subscriber station side, equivalent subscriber station TDD modem 2 and a wireless communication device X2 connected thereto. Although not shown, information processing device is connected to each of the TDD modems 1 and 2 either directly or via communication equipment such as a HUB, similarly to the above-described wireless communication system Z1.

This wireless communication system Z2 performs wireless communication in different frequency bands in the uplink and in the downlink directions (uplink: fu, downlink: fd). Below, the wireless communication device X2 is explained, for the case of the master station side. For the subscriber station side, excepting that the frequency conversion width of communication signals is reversed on the transmission side and on the reception side, the configuration is the same as for the master station side.

As shown in Fig. 2, the wireless communication device X2 comprises the circulator 11, frequency converter 2b, transmit antenna 31, and receive antenna 32.

The circulator 11 is the same as that in the wireless communication device X1.

The frequency converter 2b (master station side; similarly below) comprises an up-converter 21b (one example of the transmission side frequency conversion means), which performs frequency conversion processing of signals output from the first connection terminal p 1 of the circulator 11 to raise the frequency by a predetermined frequency width (fd - f0), and a down-converter 22b (one example of the reception side frequency conversion means), which performs frequency conversion processing to lower the frequency "fu" of receiving signals from the receive antenna 32 by a predetermined frequency width (fu - f0) and outputs the signals to the second connection terminal "p2" of the circulator 11 (first circulator).

The up-converter 21b comprises the mixer 211, the power amplifier 212 which amplifies the power of signals output from the mixer 211, and a frequency oscillator 231 which supplies reference frequency signals (reference signals) for use in frequency conversion; by mixing signals from the circulator 11 with signals output from the frequency oscillator 231, frequency conversion (up-conversion) by the predetermined frequency width (fd - f0) is performed.

Further, the down-converter 22b comprises the low-noise amplifier 222 which amplifies input signals, the mixer 221, and a frequency oscillator 232 which supplies reference frequency signals (reference signals) for use in frequency conversion. By mixing output signals from the frequency oscillator 232 with signals output from the low-noise amplifier 221, frequency conversion (down-conversion) by a predetermined frequency width (fu - f0) is performed. In the configuration of Fig. 2, the up-converter 21b and down-converter 22b use single-stage conversion for simplicity, but a configuration may be used in which conversion is in two or more stages (in series). Here, the frequency oscillator 231 and the frequency oscillator 232 output reference signals at different frequencies (at the frequencies (fd - f0) and (fu - f0) respectively), and by this means, the up-converter 21b (one example of the transmission side frequency conversion means) and the down-converter 22b (one example of the reception side frequency conversion means) perform conversion using different frequency widths.

Further, the wireless communication device X2 comprises a receiving bandpass filter 42 (an example of the reception side filter means), in a signal path from the receive antenna 32 to the down-converter 22b (reception side frequency conversion means), which passes a band with the predetermined wireless receiving frequency "fu" of receiving signals from the counterpart wireless communication device, and blocks a narrow band with the frequency "fd" of signals output from the up-converter 21b. Similarly, a transmitting bandpass filter 41 (an example of the transmitting filter means) is provided in a signal path from the up-converter 2b to the transmit antenna 31, which passes a band with the frequency "fd" of signals output from the up-converter 21b, and blocks a band with the predetermined wireless receiving frequency "fu" of signals received from the counterpart communication device.

By this means, even when transmitting signals from the transmit antenna 31 are received by the receive antenna 32 of the same station, intrusion of the signals thereinto is blocked by the receiving bandpass filter 42, so that more reliable and stable communication quality can be secured. Such a configuration is effective for securing satisfactory communication quality even when considerable noises result from turning of signals to the receiving path of the same station due to increases in the power level of transmitting signals for extending the transmitting distance of the wireless communication or for other reasons, and when the TDD transmitting/receiving timings shift and temporarily overlap.

Upon actually connecting the master station-side TDD modem 1 and the subscriber station-side TDD modem 2 to a network and conducting communication tests, the communication speed and error rate were substantially the same as when no frequency conversion was performed, and it was confirmed that satisfactory communication quality could be secured.

### (Third Embodiment)

Next, a wireless communication device X3 according to a third embodiment of the present invention and a wireless communication system Z3 having the wireless communication device X3 as a constituent element will be described with reference to the schematic configuration view of Fig. 3. Constituent elements which are the same as those in the wireless communication systems Z1, Z2 are assigned the same symbols.

The wireless communication system Z3 has the same configuration as the wireless communication system Z2, except that the configuration of the wireless communication device X3 is different from that of the wireless communication device X2.

A difference between the wireless communication device X3 and the wireless communication device X2 is that the transmit antenna 31 and the receive antenna 32 are configured as a single transmit/receive antenna 30. However, if the transmitting path and the receiving path are merely coupled to use the single antenna, returning of transmitting signals to the receiving path side may occur. Even if the returned transmitting signals are blocked by a filter, the reflected waves of the returned transmitting signals may become noses in transmitting signals.

Thus, the wireless communication device X3 comprises another circulator 5 (corresponding to the second circulator), which takes as input, via the transmitting bandpass filter 41, signals output from the up-converter 2b (transmission side frequency conversion means) connected to the transmit/receive antenna 30, and outputs these signals to the transmit/receive antenna 30, and in addition outputs signals input from the transmit/receive antenna 30 (receiving signals) via the receiving bandpass filter 42 to the down-converter 22b (reception side frequency conversion means).

By this means, transmitting signals and receiving signals are separated on the antenna side as well. In actual communication tests, it was confirmed that satisfactory communication quality could be secured.

The configuration which employs the transmit/receive antenna as the transmit antenna and receive antenna may also be applied to the wireless communication device X 1 shown in Fig. 1.

### (Fourth Embodiment)

Next, a wireless communication device X4 according to a fourth embodiment of the present invention and a wireless communication system Z1 having the wireless communication device X4 as a constituent element will be described with reference to the schematic configuration view of Fig. 1 Constituent elements which are the same as those in the wireless communication systems Z1 to Z3 are assigned the same symbols.

The wireless communication system Z4 has the same configuration as the wireless communication system Z2, except that a plurality of the TDD modems 1 and 2 are provided on both the master station side and on the subscriber station side. In the example shown in Fig. 4, two TDD modems 1 and 2 are provided on both the master station side and on the subscriber station side, but configurations with three or more modems for each station are similarly possible.

For connection of a plurality of TDD modems 1 and 2, the wireless communication device X4 comprises a plurality of circulators 11 (corresponding to first circulators) respectively connected to the TDD modems 1 and 2.

Further, the wireless communication device X4 comprises a combiner 61 (an example of the output signal combining means) which combines output signals from the first connection terminals "p1" (corresponding to the above-mentioned one connection terminal) of each of the circulators 11 and outputs the signals to the up-converter 21b (transmission side frequency conversion means), and a divider 62 (an example of the dividing means) which distributes signals output from the down-converter 22b (reception side frequency conversion means) to the second connection terminals (corresponding to other connection terminals) of each of the circulators 11 (first circulators).

Sets of a plurality of TDD modems 1 and 2 (modem sets) are provided for each of the different channel frequencies f01 and f02, which are used as baseband frequencies in up-conversion by the up-converter 21b, as a result of which multichannel transmission in a plurality of channels is used for transmission of uplink and downlink wireless signals. Thus by dividing and distributing communication data among the TDD modems 1 and 2, an increase in communication speed (an increase in capacity) substantially proportional to the number of sets of modems is possible.

Here, the modem sets are mutually asynchronous; but because the wireless frequencies (channel frequencies) are different, although during reception by one TDD modem 1 or 2 in one station (master station or subscriber station) there may be transmission by the other TDD modem 1 or 2 of the station, in this case the inflow of transmitting signals to the reception side circuit is blocked by the receiving bandpass filter 42, so that stable wireless communication can be performed by each of the modem sets independently, without saturation of the amplifier 222 of the down-converter 22b or degradation of the receiving signal SN ratio.

In actual communication tests using the configuration of Fig. 4 (with two modem sets), satisfactory communication quality was secured, and moreover, through multichannel transmission the communication speed was approximately twice that of the wireless communication system Z1.

When, in the wireless communication system Z4, the frequencies of communication signals for each of the modem sets (the channel frequencies of baseband signals) are proximate and radio interference occurs, narrowband bandpass filters, which pass only a fixed frequency range above and below the center frequencies for each of the channel signals, may be inserted in the signal paths on the input side of the combiner 61 and on the output side of the divider 62. By this means, the peripheral portions of the frequency distributions of the channel signals are cut off, and radio interference with other channel signals is prevented.

Further, in the wireless communication system Z4, wireless frequencies for each modem set is set using the baseband channels (the frequency settings of the TDD modems 1, 2), but by providing frequency converters 2b in a number equal to the number of modem sets, making the oscillation frequencies (reference signal frequencies) different for the frequency oscillators 231, 232 for each frequency converter 2b, that is, making the frequency conversion widths different, the wireless frequencies of each modem set may be set (made different).

Further, in the wireless communication system Z4, wireless communication devices X4 are described in which the same number of TDD modems 1 or 2 are connected on the master station side and on the subscriber station side; but different numbers of TDD modems 1 or 2 may be connected in the master station side wireless communication device and in the subscriber station side wireless communication device.

Fig. 5 shows a schematic configuration of a wireless communication system Z5 in which the wireless communication device X4 and the wireless communication device X2 are respectively provided on the master station side and on the subscriber station side.

As shown in Fig. 5, a wireless communication system Z5 is possible in which, on the master station side the wireless communication device X4 is provided, connected to a plurality of TDD modems 1, and on the subscriber station side, the wireless communication device X2, connected to one subscriber station side TDD modem 2 corresponding to each of the plurality of TDD modems 1 on the master station side, is provided. In addition to this, a configuration is also possible in which, on the master station side, the wireless communication device X4 connected to a plurality of (for example, four) TDD modems 1 is provided, and on the subscriber station side a plurality (for example, two) of the wireless communication devices X4, to which are connected subscriber station side TDD modems 2 corresponding to a portion of (for example, two) TDD modems 1 on the subscriber station side, are provided.

### (Fifth Embodiment)

Next, a wireless communication device X5 according to a fifth embodiment of the present invention will be described with reference to the schematic configuration view of Fig. 6. Constituent elements which are the same as those in the wireless communication devices X1 and X2 are assigned the same symbols.

Similarly to the wireless communication devices X 1 to X4, the wireless communication device X5 also performs wireless communication with a counterpart wireless communication device of similar configuration.

Similarly to the wireless communication device X2, the wireless communication device X5 shown in Fig. 6 performs wireless communication in frequency bands which are different in the uplink and downlink directions (uplink: fu, downlink: fd), but similarly to the wireless communication device X1, similar advantageous results are obtained even when wireless communication is performed in the same frequency band in the uplink and downlink directions.

Below, the wireless communication device X5 is explained for the case of the master station side. For the subscriber station side, except for that the frequency conversion width of communication signals is reversed on the transmission side and on the reception side, the configuration is the same as for the master station side.

As shown in Fig. 6, in place of the receiving bandpass filter 42 of the wireless communication device X2, the wireless communication device X5 comprises a variable attenuator 53 (one example of the reception side variable attenuation means), which attenuates signals flowing in the signal path from the receive antenna 32 (when a transmit/receive antenna 30 is used, from the circulator 5 (second circulator) (see Fig. 3)) to the circulator 11 (first circulator), and also can change the presence of attenuation (whether attenuation is performed).

Further, the wireless communication device X5 comprises a directional coupler 50 and detector 51, which retrieve an electrical signal substantially proportional to the intensity of signals being sent to the transmit antenna 31, in the signal path from the circulator 11 (first circulator) to the transmit antenna 31 (or when a transmit/receive antenna 30 is used, to the circulator 5 (second circulator) (see Fig. 3)), as means of detecting the presence of transmitting signals from the TDD modem 1, and a comparator 52, which outputs a control signal of predetermined voltage level when electrical signals retrieved as above exceed a reference voltage provided in advance. At other times (when the reference voltage is not exceeded), no control signal is output (including cases in which no signal is output, and cases in which signals at a predetermined low level are output). By this means, whether signals flowing in the signal path from the circulator 11 (first circulator) to the transmit antenna 31 (or when a transmit/receive antenna 30 is used, to the circulator 5 (second circulator) (see Fig. 3)) have an intensity which exceeds a predetermined intensity (an intensity set in advance to indicate that transmission is in progress) can be detected through the presence of control signals output by the comparator 52. Thus control signals are output from the comparator 52 when there exist transmitting signals from the modem (during transmission), and at other times no transmitting signals from the modem exist (at times other than transmission).

Fig. 6 shows an example in which the directional coupler 50 and detector 51 are provided in the signal path from the up-converter 21b to the transmit antenna 31; but other configurations are possible, and the devices may be provided in another position in the signal path from the circulator 11 to the transmit antenna 31 (when using a transmit/receive antenna 30, to the circulator 5 (second circulator) (see Fig. 3)). Further, only signals in the transmitting direction are retrieved by the directional coupler 50, and so placement between the TDD modem 1 and circulator 11 is also possible.

Further, the wireless communication device X5 comprises a variable attenuator 53 (an example of the reception side variable attenuation means), which, based on the presence of the control signals from the comparator 52 (an example of detection results by the transmitting signal detection means), changes whether attenuation is performed (or the degree of attenuation) of signals flowing in the signal path from the receive antenna 32 (or when a transmit/receive antenna 30 is used, from the circulator 5 (second circulator) (see Fig. 3)) to the circulator 11 (first circulator). The gain of the variable attenuator 53 is set such that input signals are maximally attenuated when transmitting signals are detected by the comparator 52 (during output of control signals), and at other times is set such that input signals are not attenuated (gain = 1) (or the gain is set to the minimum attenuation width). By this means, even when the frequency bands of transmitting and receiving signals are proximate or overlap, during signal transmission by the TDD modem 1, even when there is wraparound of the transmitting signals from the transmit antenna 32 to the down-converter 22b and to the variable attenuator 53, wraparound signals from there into the circulator 11 and the up-converter 21b on the transmitting path side are suppressed to a negligible level.

Further, as shown in Fig. 6, a configuration is possible in which the variable attenuator 53 is replaced with an RF switch 54. Here, the RF switch 54 is a switch (one example of a reception side switch) which switches between blocking and passing signals flowing in the signal path from the receive antenna 32 (or when a transmit/receive antenna 30 is used, from the circulator 5 (second circulator) (see Fig. 3)) to the circulator 11 (first circulator), based on the presence of control signals (one example of detection results by the transmitting signal detection means) from the comparator 52. This RF switch 54 switches to the blocked side during signal transmitting by the TDD modem 1 (when there are control signals output), and at other times switches to the passing side.

By this means also, advantageous results similar to those in the case of using the variable attenuator 53 are obtained. In Fig. 6, the variable attenuator 53 or RF switch 54 are placed in the signal path from the down-converter 22b to the circulator 11; but other configurations are possible, and the devices may be placed at another position in the signal path from the receive antenna 32 (or when a transmit/receive antenna 30 is used, from the circulator 5 (second circulator) (see Fig. 3)) to the circulator 11 (first circulator).

### (Sixth Embodiment)

Next, with reference to the schematic configuration diagram of Fig. 7, the wireless communication device X6 according to the sixth embodiment of the invention will be described, in which the means of controlling receiving signals in the wireless communication device X5 (the variable attenuator 53) is modified. Constituent elements which are the same as those in the wireless communication devices X1, X2 and X5 are assigned the same symbols.

Similarly to the wireless communication device X5, the wireless communication device X6 also performs wireless communication with a similarly configured counterpart wireless communication device, and has the same configuration in which receiving signals are controlled by detection of transmitting signals of the TDD modem 1. The wireless communication device X6 differs from the wireless communication device X5 only in comprising means to control the receiving signals of the TDD modem 1.

The wireless communication device X6 eliminates the variable attenuator 53 in the wireless communication device X5, and instead substitutes for the low-noise amplifier 222 in the receiving signal path a gain-modifiable (enabling modification of the degree of signal amplification, or whether amplification is performed) variable gain amplifier 222x. Further, based on the presence of control signals from the comparator 52 (the detection results of the transmitting signal detection means), the degree to which receiving signals are amplified by, or whether signals are amplified by, the variable-gain amplifier 222x, is modified.

Specifically, during output of control signals (during transmission of the TDD modem 1), the gain of the variable gain amplifier 222x is set to minimum gain (to negative gain or to no amplification (gain = 1)), and at other times the gain of the variable-gain amplifier 222x is set to a predetermined gain (a higher gain than the minimum gain) necessary during reception. By means of this configuration, during transmission by the TDD modem 1, signal amplification in the receiving path is suppressed, so that intrusion of the signals to the transmitting path at a level which cannot be ignored.

In the example shown in Fig. 7, low-noise amplifier 222 is replaced with a variable-gain amplifier 222x; but other configurations are possible, and the gain of the low-noise amplifier 222 may be set to the minimum necessary gain, and the variable-gain amplifier 222x may be provided separately as an amplifier which provides the remaining necessary amplification amount. In this case, the variable-gain amplifier 222x may be provided at any position in the signal path from the receive antenna 32 (or when a transmit/receive antenna 30 is used, from the circulator 5 (second circulator) (see Fig. 3)) to the circulator 11 (first circulator).

### (Seventh Embodiment)

Next, with reference to the schematic configuration diagram of Fig. 8, the wireless communication device X7 according to the seventh embodiment of the invention, will be described, in which the configuration of the transmitting signal detection portion in the wireless communication device X5 is modified. Constituent elements which are the same as those in the wireless communication devices X1, X2 and X5 are assigned the same symbols.

Similarly to the wireless communication device X5, the wireless communication device X7 also performs wireless communication with a similarly configured counterpart wireless communication device, and has the same configuration in which the variable attenuator 53 or RF switch 54 is controlled according to detection of transmitting signals of the TDD modem 1. The wireless communication device X7 differs from the wireless communication device X5 only in comprising means of detecting the presence of transmitting signals of the TDD modem 1.

The wireless communication device X7 also comprises the power amplifier 212, but the power amplifier 212 amplifies signals flowing in the path and has power consumption which changes according to the intensity of the signals to be amplified (an example of power-modification type amplification means). Such an amplifier is normally provided on the output side of the up-converter 21b as shown in Fig. 8, but may also be placed at a different position in the signal path from the receive antenna 31 (or when a transmit/receive antenna 30 is used, from the circulator 5 (second circulator) (see Fig. 3)) to the circulator 11 (first circulator).

Further, in the path of the direct current power supply (constant-voltage power supply) to the power amplifier 212 (power-modification type signal amplification means) of the wireless communication device X7 is provided an I-V converter 55 which outputs voltage signals substantially proportional to the current supplied to the power amplifier 212 (that is, substantially proportional to the power consumption), and the output voltage signals from this I-V converter 55 are input to the comparator 52 for comparison with the reference voltage. By this means, the comparator 52 detects when the power consumption of the power amplifier 212 exceeds a predetermined power (equivalent to the power consumed in signal transmission), and as a result detects the presence of transmitting signals from the TDD modem 1. Thus this embodiment of the invention is an example of a configuration in which transmitting signals of the TDD modem 1 are detected indirectly.

In the configurations of Fig. 2 through Fig. 5 and Fig. 6 through Fig. 8, the up-converter 21a and down-converter 22a use single-stage conversion for simplicity, but a configuration may be used in which conversion is in two or more stages (in series). In this case, as shown in Fig. 1, single-stage or a multiple-stage frequency conversion portions may be provided in the up-converter 21a and in the down-converter 22a which use a common frequency oscillator 23, and in addition a single-stage or multiple-stage frequency conversion portion which uses a dedicated frequency oscillator may be provided in series in one or the other (in either the up-converter 21a or in the down-converter 22a).

### (Eighth Embodiment)

Next, with reference to the schematic configuration diagram of Fig. 9, the wireless communication device X8 of the eighth embodiment of the present invention will be described. Constituent elements which are the same as those in the wireless communication devices X 1 to X3 are assigned the same symbols.

Similarly to the wireless communication devices X 1 to X3, the wireless communication device X8 performs wireless communication with a similarly configured counterpart wireless communication device.

Similarly to the wireless communication device X1, the wireless communication device X8 shown in Fig. 9 performs wireless communication in the same frequency band (f1) in both the uplink and the downlink directions, using in common the frequency oscillator 23 for the uplink (reception side) and downlink (transmission side) directions. and is particularly suitable configuration for this case. However, wireless communication may also be performed using different frequency bands for the uplink and downlink directions, similarly to the wireless communication device X2.

Below, the wireless communication device X8 is explained for the case of the master station side. For the subscriber station side, except for the fact that the frequency conversion width of communication signals is reversed on the transmission side and on the reception side, the configuration is the same as for the master station side. The situation is similar for the wireless communication devices X9 through X 12 described below. The wireless communication device X8 has the same configuration as the wireless communication device X1, except that the configuration of the down-converter 22a is different from that in the wireless communication device X1. The down-converter in the wireless communication device X8 is represented by 22av, and the frequency converter comprised thereby is 2av.

The down-converter 22av in the wireless communication device X8 comprises a divider 71 (an example of receiving signal dividing means) which divides receiving signals from the receive antenna 32 into a plurality of signals, a plurality of receiving amplifiers 222n (an example of divided signal amplification means) which amplify each of the plurality of divided signals divided by the divider 71, and a combiner 72 (an example of divided signal coupling means) which couples (merges) the plurality of divided signals after amplification by the receiving amplifiers 222n.

Then, the down-converter 22av (reception side frequency conversion means) inputs the signals coupled (merged) by the combiner 72 into the mixer 221, to perform frequency conversion (down-conversion) of the coupled signals.

By thus dividing the receiving signals into a plurality of signals, the signal levels of each of the divided signals becomes low, so that the level of signal input to each of the receiving amplifiers 222n is suppressed, and damage to each of the amplifiers due to returning of high-intensity transmitting signals from the station itself can be prevented.

### (Ninth Embodiment)

Fig. 10 is a schematic configuration view of the wireless communication device X9 of a ninth embodiment of the present invention, in which a portion of the wireless communication device X8 is modified.

In the wireless communication device X9, the transmit antenna 31 and receive antenna 32 in the wireless communication device X8 are replaced with a transmit/receive antenna 30, similarly to the wireless communication device X3, and another circulator 5 (equivalent to the second circulator) is provided on the antenna side to isolate the transmitting path and the receiving path.

As explained above, there is a limit (approximately 25 dB) to the degree of isolation of signals by the circulator; but by means of the configuration of the wireless communication device X9, even when there is returning of transmitting signals of the station to the receiving path via the antenna-side circulator 5, due to dividing of the receiving signals, the signal input level to each of the receiving amplifiers 222n is suppressed, and so damage to the amplifiers due to returning of high-intensity transmitting signals from the station can be prevented.

### (Tenth Embodiment)

Next, with reference to the schematic configuration diagram of Fig. 11, the wireless communication device X10 of the tenth embodiment of the present invention will be described. Constituent elements which are the same as those in the wireless communication devices X 1 to X3 are assigned the same symbols.

Similarly to the wireless communication device X8, the wireless communication device X10 shown in Fig. 11 also comprises a frequency oscillator 23 which is used in common on the transmission side and on the reception side, and wireless communication is performed in the same frequency band (f1) in the uplink and in the downlink directions. This configuration is a particularly suitable configuration, but wireless communication may also be performed using different frequency bands for the uplink and downlink directions, similarly to the wireless communication device X2.

The wireless communication device X10 has the same configuration as the wireless communication device X1, except that the configuration is different for the up-converter 21a and the down-converter 22a in the wireless communication device X1. The up-converter in the wireless communication device X10 is indicated by 21av, the down-converter by 22aw, and the frequency converters comprised by each are indicated by 2aw.

Similarly to the wireless communication device X5, the wireless communication device X10 comprises a directional coupler 50 and detector 51 (an example of the transmitting signal detection means), which detect the presence of transmitting signals from the TDD modem 1. Here, the detector 51 in the wireless communication device X10, and in the wireless communication devices X11, X12 described below, combines the functions of the comparator 52 in the wireless communication device X5.

However, differences of the wireless communication device X10 with the wireless communication device X5 are that the directional coupler 50 and detector 51 are provided on the input side of the power amplifier 212 (in the figure, indicated as the power amplifier 212) in the transmitting converter 21av, and that a switch which performs a function similar to that of the RF switch 54, that is, a high-frequency switch 54' (an example of a reception side switch), which switches between signal blocking and signal passing based on whether transmitting signals are detected (whether transmission is in progress) by the directional coupler 50 and detector 51, is provided in the signal path from the receive antenna 32 to the circulator 11 (first circulator). By this means, switching is performed such that signals flowing in the reception side signal path are blocked during signal transmission by the TDD modem 1, and at other times are passed (receiving signals are transmitted to the side of the TDD modem 1).

By means of this configuration also, similarly to the wireless communication device X5, during signal transmission by the TDD modem 1, it can be prevented that the transmitting signals return via the receiving signal path to again enter the transmitting path.

In particular, the high-frequency switch 54' (reception side switch) in the wireless communication device X10 is provided on the input side of the low-noise amplifier 222 (an example of receiving signal amplification means; in the drawing, represented as a receiving amplifier) which amplifies receiving signals before frequency conversion is performed by the down-converter 22aw (an example of reception side frequency conversion means). Thus signal switching by the high-frequency switch 54' (reception side switch) is performed for receiving signals prior to amplification by the low-noise amplifier 222 (receiving signal amplification means). By this means, when returning of high-intensity transmitting signals to the receiving signal path occurs, damage to the low-noise amplifier 222 by the returning of signals can be prevented.

The high-frequency switch 54' (an example of the reception side switch) in the wireless communication device X10 may of course be replaced by the variable attenuator 53 (an example of the reception side variable attenuation means) of the wireless communication device X5 or by a variable-gain amplifier or similar to adjust the signal level, so that similar advantageous results can be obtained.

Further, the directional coupler 50 and detector 51 are provided on the input side of the power amplifier 212, so that signal attenuation factors are not present between the power amplifier 212 (power amp) and the transmit antenna 31, and so transmitting signals can be output at high power (with no unnecessary attenuation) from the transmit antenna 31.

### (Eleventh Embodiment)

Next, with reference to the schematic configuration diagram of Fig. 12, the wireless communication device X1 of the eleventh embodiment of the present invention will be described. Constituent elements which are the same as those in the wireless communication devices X1 to X3 are assigned the same symbols.

Similarly to the wireless communication devices X8 to X10, the wireless communication device X11 shown in Fig. 12 also comprises the frequency oscillator 23 used in common by the transmission side and reception side, and wireless communication is performed in the same frequency band (f1) in both the uplink and the downlink directions. This configuration is particularly suitable, but wireless communication may also be performed using different frequency bands for the uplink and downlink directions, similarly to the wireless communication device X2.

The configuration of the wireless communication device X11 is the same as that of the wireless communication device X1, except for the different configuration of the up-converter 21a in the wireless communication device X1. The up-converter in the wireless communication device X11 is indicated by 21 law, and the frequency converter comprised thereby is indicated by 2ax.

Similarly to the wireless communication device X10, the wireless communication device X11 comprises a directional coupler 50 and detector 51 (an example of transmitting signal detection means) which detect the presence of transmitting signals from the TDD modem 1.

However, differences with the wireless communication device X5 are that the directional coupler 50 and detector 51 are provided on the input side of the power amplifier 212 in the transmitting converter 21av, and that, in place of the RF switch 54, a high-frequency switch 56 (an example of the transmission side switch), which switches between signal blocking and signal passing based on whether transmitting signals are detected (whether transmitting or not) by the directional coupler 50 and detector 51, is provided in the stage before the power amplifier 212 (in the signal path from the first circulator 11 to the transmit antenna 31 (when the transmit/receive antenna 30 is used, to the second circulator 5)).

By this means, switching is performed such that signals flowing in the reception side signal path are blocked during signal transmission by the TDD modem 1, and are passed at other times (receiving signals are transmitted to the TDD modem 1).

In such a configuration also, similarly to the wireless communication device X5, during signal transmission by the TDD modem 1, it can be prevented that returning of transmitting signals via the receiving signal path again enter the transmitting path.

In particular, in the wireless communication device X11, signal switching by the high-frequency switch 56 (transmission side switch) is performed for transmitting signals prior to amplification by the power amplifier 212 (an example of transmitting signal amplification means), so that raising of the noise floor on the reception side (worsening of the SN ratio) during reception by the TDD modem 1 when signals due to thermal noise accumulated in the signal path from the circulator 11 to the power amplifier 212 are amplified by the power amplifier 212 and released, and returning of the signals to the reception side signal path occurs, can be prevented.

Here, an example is explained for comparing cases in which the transmission side signal path in the stage before the power amplifier 212 is blocked and is not blocked during reception by the TDD modem 1.

When a high-frequency switch 56 was not provided (when blocking of the transmitting signal path during reception was not performed), the thermal noise level released from the transmit antenna 31 during reception by the TDD modem 1 was -78 dBm.

At this time, if the transmitting/receiving coupling was -20 dB, then noise signals at -98 dBm would flow into (wraparound into) the reception side signal path, and if the noise floor (equivalent noise level) originally with no transmitting signal wraparound was -101 dBm (temperature 27°C, equivalent noise band 20 MHz), then the reception side noise floor due to wraparound of thermal noise signals would rise to -96 dBm. Consequently, if the level of signals received from the counterpart device is -80 dBm, and the noise figure for the receiving circuit is 6 dB, then the reception side SN ratio, which was originally 15 dB, would fall to 10 dB due to wraparound of thermal noise signals.

On the other hand, when a high-frequency switch 56 was provided for which the insertion loss for insertion into the transmitting signal path was 1 dB when signals are passed (signal path connection) and was 40 dB when signals are blocked, and the transmitting signal path was blocked during reception, the thermal noise level released from the transmit antenna 31 was -87 dBm. That is, the thermal noise level was improved by 9 dB (= - 78 - (-87)).

At this time, if the transmitting/receiving coupling was -20 dB, then the noise signal power entering (by wraparound) the reception side signal path was -107 dBm, and if the original noise floor (equivalent noise level) on the reception side without returning of transmitting signals was - 101 dBm, then the reception side noise floor due to returning of thermal noise signals rises to -100 dBm. Consequently if the receiving signal level from the counter part transmitting device is -80 dBm, and the receiving circuit noise figure is 6 dB, then the reception side SN ratio is 14 dB, and the SN ratio is improved by 4 dB compared with the case in which blocking of the transmitting signal path is not performed.

Of course, if the high-frequency switch 56 (an example of the transmitting side switch) in the wireless communication device X11 is replaced with the variable attenuator 53 in the wireless communication device X5 (an example of transmission side variable signal attenuation means which modifies the extent of signal attenuation, or whether signals are attenuated), similar advantageous action can be anticipated.

### (Twelfth Embodiment)

Next, with reference to the schematic configuration diagram of Fig. 13, the wireless communication device X12 of the twelfth embodiment of the present invention will be described. Constituent elements which are the same as those in the wireless communication devices X 1 to X3 and X11 are assigned the same symbols.

The wireless communication device X12 shown in Fig. 13 has the same constituent elements as the wireless communication device X11, but differs from the wireless communication device X11 in that the directional coupler 50 and detector 51 (an example of transmitting signal detection means) which detect the presence of transmitting signals from the TDD modem 1, and the high-frequency switch 56 which switches between transmitting signal passing and blocking, are placed in the signal path from the circulator 11 to the mixer 211 which converts the frequency of transmitting signals. In other words, the device is configured such that signal switching by the high-frequency switch 56 is performed for transmitting signals before frequency conversion. It should be noted that whereas in the wireless communication device X11 the up-converter and frequency converter are denoted by 21aw and 2ax, in the wireless communication device X12 in which the placement positions of the directional coupler 50 and detector 51 as well as the high-frequency switch 56 are different, the up-converter and frequency converter are denoted by 21ax and 2ay.

By means of this wireless communication device X12, under the same conditions as indicated in the explanation of the wireless communication device X11, the signal level for thermal noise (thermal noise level) released from the transmit antenna 31 during reception by the TDD modem 1 was -84 dBm. That is, the thermal noise level was improved by 6 dB compared with the case in which there is no blocking of the transmitting signal path (-78 dB). Similarly, as a result of noise signal inflow to the reception side circuit at -104 dB (= -84 -20), the resulting receiving noise floor was -99 dBm, and the receiving SN ratio including this was 13 dB. This was an improvement of 3 dB compared with the case in which no blocking of the transmitting signal path is performed.

Compared with the wireless communication device X11, this result is somewhat inferior with respect to the degree of improvement in the SN ratio due to suppression of thermal noise, but the directional coupler 50 and detector 51 (an example of transmitting signal detection means) and the high-frequency switch 56 (an example of a transmission side switch) can be configured as devices accommodating comparatively low-frequency (intermediate-frequency) signals prior to signal conversion, and so there is the advantage that costs can be reduced.

In the wireless communication device X11 and the wireless communication device X 12, the high-frequency switch 56 may be interposed between the power amplifier 212 and the transmit antenna 31 as well. However, in this case the maximum output level of transmitting signals during transmission by the TDD modem 1 is lowered by an amount of loss due to the interposal of the high-frequency switch 56 (in the previous example, 1 dB) from the maximum output level of the power amplifier 212.

Further, in the wireless communication device X11 and the wireless communication device X12, the directional coupler 50 and detector 51 which detect the presence of transmitting signals, and the high-frequency switch 56 which switches between transmitting signal passing and blocking, are connected adjacently, but these may be positioned at a distance as well (for example, with either the mixer 211 or the power amplifier 212, or both, connected therebetween). However, of course, it is necessary that the directional coupler 50 and the detector 51 are placed upstream in the transmitting signal path from the high-frequency switch 56.

Further, when, due to the relation between the transmitting signal rate and the response time for signal switching by the high-frequency switch 56, there is a possibility that complete switching to signal passing by the high-frequency switch 56 is not completed by the time transmitting signals arrive at the high-frequency switch 56 after the start of transmission by the TDD modem 1, a signal delay circuit may be provided in the signal path from the circulator 11 (first circulator) to the high-frequency switch 56.

### (Thirteenth Embodiment)

Next, with reference to the schematic configuration diagram of Fig. 14, the wireless communication device X13 of the thirteenth embodiment of the present invention will be described. Constituent elements which are the same as those in the wireless communication devices X1 and X2 are assigned the same symbols.

Similarly to the wireless communication devices X 1 to X4, the wireless communication device X13 performs wireless communication with a similarly-configured counterpart wireless communication device.

In Fig. 14, the frequency converter portion in the wireless communication device X13 is denoted by 2az, the up-converter portion by 21az, and the down-converter portion by 22az. Similarly to the wireless communication device X1, the wireless communication device X13 shown in Fig. 14 performs wireless communication using the same frequency band in both the uplink and the downlink directions, but similarly to the wireless communication device X2, similar advantageous action is obtained when wireless communication is performed in different frequency bands in the uplink and downlink directions.

Below, the wireless communication device X13 is explained for the case of the master station side. Except for that the frequency conversion width of communication signals is reversed on the transmission side and on the reception side, the configuration of the subscriber station side is the same as that for the master station side.

As shown in Fig. 14, the wireless communication device X13 comprises a burst signal detector 65 (burst signal detection means) which detects the presence of burst signals, which are transmitting signals from the TDD modem 1, in the transmitting signal path from the circulator 11 (first circulator) to the transmit antenna 31 (when a transmit/receive antenna 30 is used, to the circulator 5 (second circulator) (see Fig. 3)). In the example of Fig. 14, the burst signal detector 65 is provided in the signal path before frequency conversion (up-conversion) is performed by the mixer 211.

The burst signal detector 65 comprises a signal attenuator 65a, provided in a dividing path from the signal transmitting path, and a high-frequency detector 65b, which detects the presence of burst signals according to whether the level of signals which have passed through the signal attenuator 65a exceed a prescribed preset level.

Here, it is supposed that the level of burst signals (transmitting burst signals) transmitted from the TDD modem 1 and arriving at the dividing portion of the transmitting signal path is approximately 0 dBm, that the degree of coupling with the dividing portion (divider) of the transmitting signal path is approximately -6 dB, that the minimum detection sensitivity of the high-frequency detector 65b is approximately -60 dBm, that the level of burst signals on the receiving signal path side is approximately -20 to -60 dBm, and that the degree of coupling from the receiving signal path side of the circulator 11 to the transmitting signal path side is approximately -20 dB.

In this case, if the attenuation level of the signal attenuator 65a is approximately -40 dB, then when signals which have passed through the signal attenuator 65a and are input tot he high-frequency detector 65b are transmitting burst signals, the input signal level is approximately -46 dBm, so that "transmitting burst signals present" is detected, and a logic-on signal (+5 V) is output. If, on the other hand, the input signals are returned signals from the receiving signal path side, the input signal level is approximately -86 to -126 dBm, and so "no transmitting burst signals present" is detected, and a logic-off signal (0 V) is output. By this means, whether the TDD modem 1 is transmitting or receiving can be judged (discriminated).

Further, the wireless communication device X13 comprises a transmission side signal intensity adjustment circuit 67 which, based on burst signal presence detection results by the burst signal detector 65, adjusts the intensity of signals flowing in the transmitting signal path, and a reception side signal intensity adjustment circuit 68 which, based likewise on the detection results of the burst signal detector 65, adjusts the intensity of signals flowing in the receiving signal path from the receive antenna 32 (when a transmit/receive antenna 30 is used, from the circulator 5 (second circulator) (see Fig. 3)) to the circulator 11 (first circulator).

Here, the transmission side signal intensity adjustment circuit 67, that is, the signal intensity adjustment circuit provided in the signal path on the side on which burst signal detection is performed by the burst signal detector 65, is placed in a position on the downstream side in the direction of signal flow from the signal detection position by the burst signal detection circuit 65 (on the side nearer the transmit antenna 31) in the signal path (the transmitting signal path).

Further, the transmission side signal intensity adjustment circuit 67 and the reception side signal intensity adjustment circuit 68 respectively comprise FET switches 67a, 68a and variable-gain amplifiers 212x, 222x.

Detection signals (on/off) from the burst signal detector 65 are transmitted to each of the FET switches 67a, 68a via a control signal former 66, and the FET switches 67a, 68a perform switching control to raise the level (cause amplification) or lower the level (cause attenuation) of signals in the variable-gain amplifiers 212x, 222x, based on the transmitted signals. Here, "lower the signal level (cause attenuation)" effectively includes the action of blocking signal transmission.

More specifically, when burst signals are detected by the burst signal detector 65 (that is, during transmission), the detection signal (detected signal (on signal)) is converted into an inverted signal (that is, an off signal) by a single inversion (logic inversion) by the control signal former 66, and through two inversions the detected signal is delayed by a prescribed amount relative to the inverted signal and is output as a delayed signal. The inverted signal is transmitted to the reception side FET switch 68a, and the FET switch 68a causes the gain setting of the reception side variable-gain amplifier 222x to be switched to the side which lowers the signal level (the attenuation side). On the other hand, the delayed signal is transmitted to the transmission side FET switch 67a, and the FET switch 67a causes the gain setting of the transmission side variable gain amplifier 212x to be switched to the side which raises the signal level (the amplification side).

Here, the delayed signal changes after the inverted signal, so that by means of both signal intensity adjustment circuits 67 and 68, when burst signals are detected in a signal path (one signal path), the level of signals in the different, receiving signal path (the other signal path) is adjusted to be lower, and the level of signals in the transmitting signal path are adjusted to be higher with a further delay.

Similarly, when burst signals are not detected by the burst signal detector 65 (that is, during reception), the detection signal (not-detected signal (off signal)) is converted into an inverted signal (ON signal) by a single inversion (logic inversion) by the control signal former 66, and into a delayed signal by two inversions, based on the inverted signal the gain setting of the reception side variable-gain amplifier 222x is switched to the side which raises the signal level (the amplification side), and based on the delayed signal the gain setting of the transmission side variable gain amplifier 212x is switched to the side which lowers the signal level (the attenuation side).

By this means, during signal transmission (while transmitting burst signals are detected) the transmitting signals are amplified, whereas wraparound signals due to transmitting signals passing through the receive antenna 32 are attenuated (or blocked), and so are prevented from wraparound to the transmitting path to result in noise. And, signal level adjustment (amplification adjustment) in the signal path on the side of signal detection (one side) by the burst signal detector 65 is performed with a delay relative to level adjustment (attenuation adjustment) in the signal path on the opposite side (other side), so that noise due to wraparound signals can be more reliably prevented.

The delay time imparted to signals by the control signal former 66 is a time shorter than the time resulting by subtracting other time required for signal level adjustment from the signal transmission time from the position of signal detection by the burst signal detector 65 to the variable-gain amplifier 212x. As a result, attenuation of burst signals by the variable-gain amplifier 212x can be prevented.

However, in the wireless communication device X13, the burst signal detector 65 detects burst signals in the transmitting signal path, but other configurations are possible, and a configuration may be used in which burst signals are detected in the receiving signal path from the receive antenna 32 (or when a transmit/receive antenna 30 is used, from the circulator 5 (second circulator) (see Fig. 3)) to the circulator 11 (first circulator). However, in this case the reception side signal intensity adjustment circuit 68 is provided so as to adjust the intensity of signals flowing at a prescribed position downstream in the signal flow direction from the position of signal detection by the reception side burst signal detector (a position on the side near the TDD modem 1).
Further, in the wireless communication device X13, a configuration is employed in which the intensities of signals flowing in both the transmitting signal path and in the receiving signal path are adjusted by the transmission side and reception side signal intensity adjustment circuits 67, 68, but other configurations are possible, and a configuration is possible in which only one of these is provided, so that signal level adjustment (switching between amplification and attenuation) is performed in only one of the signal paths (example of signal intensity adjustment means). By means of such a configuration, wraparound signals can be prevented from becoming noise.

### INDUSTRIAL APPLICABILITY

This invention can be applied to wireless communication devices.

## Claims

1. A wireless communication device for relay transmission of communication signals transmitted and received by a time division multiduplexing type modem with a counterpart wireless communication device as wireless signals, comprising:
a first circulator connected to the modem so as to out put transmitting signals from the modem to one connection terminal, and outputting input signals from other connection terminal to the modem;
transmission side frequency conversion means for rising frequencies of the output signals from said one connection terminal of the first circulator by a predetermined frequency width, and outputting the output signals;
a transmit antenna for wireless transmission of the output signals from the transmission side frequency conversion means;
a receive antenna for receiving wireless signals; and
reception side frequency conversion means for lowering frequencies of the receiving signals by the receive antenna by a predetermined frequency width, and outputting the receiving signals to said other connection terminal of the first circulator.

2. The wireless communication device according to claim 1, wherein the transmission side frequency conversion means and reception side frequency conversion means share output signals from a single frequency oscillator to perform frequency conversion of the same frequency width.

3. The wireless communication device according to claim 1, wherein the transmission side frequency conversion means and reception side frequency conversion means respectively perform frequency conversions of different frequency widths, and
wherein the wireless communication device further comprises reception side filter means interposed in a signal path from the receive antenna to the reception side frequency conversion means, the reception side filter means passing a predetermined receiving wireless frequency band of the receiving signals from the counterpart wireless communication device and cutting off a frequency band of the output signals from the transmission side frequency conversion means.

4. The wireless communication device according to any one of claims 1 to 3, wherein the transmit antenna and receive antenna are provided as a single transmit/receive antenna, and
wherein the wireless communication device further comprises a second circulator connected to the transmit/receive antenna, the second circulator receiving the output signals from the transmission side frequency conversion means to output the output signals to the transmit/receive antenna and outputting the input signals from the transmit/receive antenna to the reception side frequency conversion means.

5. The wireless communication device according to claim 3 or claim 4,
wherein the wireless communication device comprises a plurality of the first circulators respectively connected respectively to a plurality of the modems, and
wherein the wireless communication device further comprises:
output signal combining means for combining the output signals from said one connection terminal of each of the first circulators and outputting the combined signals to the transmission side frequency conversion means; and
dividing means for distributing the output signals from the reception side frequency conversion means to said other connection terminal of each of the first circulators.

6. The wireless communication device according to any one of claims 1 to 5, wherein the transmission side frequency conversion means converts frequencies in 2.4 GHz band or 5 GHz band to frequencies in millimeter wave band or quasi-millimeter wave band, and
wherein the reception side frequency conversion means converts frequencies in the millimeter wave band or quasi-millimeter wave band into frequencies in the 2.4 GHz band or 5 GHz band.

7. The wireless communication device according to any one of claims 1 to 6, further comprising:
transmitting signal detection means for detecting presence of the transmitting signals from the modem; and
a reception side switch for switching between blocking and passing of signal flow through a signal path from the receive antenna or second circulator to the first circulator based on detection results by the transmitting signal detection means.

8. The wireless communication device according to any one of claims 1 to 6, further comprising:
transmitting signal detection means for detecting presence of the transmitting signals from the modem; and
reception side variable signal attenuation means for modifying a degree of attenuation of or for modifying whether to attenuate signals flowing in the signal path from the receive antenna or from the second circulator to the first circulator, based on detection results of said transmitting signal detection means.

9. The wireless communication device according to claim 7 or claim 8, further comprising receiving signal amplification means for amplifying the receiving signals prior to frequency conversion by the reception side frequency conversion means,
wherein the switching of signals by the reception side switch or the attenuation of the signals by the reception side variable signal attenuation means is performed for the receiving signals prior to amplification by the receiving signal amplification means.

10. The wireless communication device according to any one of claims 1 to 6, further comprising:
transmitting signal detection means for detecting presence of the transmitting signals from the modem, and
variable signal amplification means for modifying a degree of modification of or for modifying whether to amplify signals in the signal path from the receive antenna or from the second circulator to the first circulator, based on detection results of the transmitting signal detection means.

11. The wireless communication device according to any one of claims 1 to 6, further comprising:
transmitting signal detection means for detecting presence of the transmitting signals from the modem; and
a transmission side switch which switches between blocking and passing of signals flowing in the signal path from the first circulator to the transmit antenna or to the second circulator, based on detection results of the transmitting signal detection means.

12. The wireless communication device according to any one of claims 1 to 6, further comprising:
transmitting signal detection means for detecting presence of the transmitting signals from the modem; and
transmission side variable signal attenuation means for modifying a degree of attenuation of or for modifying whether to attenuate signals flowing in the signal path from the first circulator to the transmit antenna or to the second circulator, based on detection results of the transmitting signal detection means.

13. The wireless communication device according to claim 11 or claim 12, further comprising transmitting signal amplification means for amplifying the transmitting signals,
wherein the switching of the signals by the transmission side switch or the attenuation of the signals by the transmission side variable signal attenuation means is performed for the transmitting signals prior to amplification by the transmitting signal amplification means.

14. The wireless communication device according to any one of claims 7 to 13, wherein the transmitting signal detection means detects the presence of the transmitting signals from the modem by detecting whether or not intensity of the signals flowing in the signal path from the first circulator to the transmit antenna or to the second circulator exceeds a predetermined intensity.

15. The wireless communication device according to any one of claims 7 to 13, further comprising power modification type signal amplification means for amplifying the signals flowing in the signal path from the first circulator to the transmit antenna or to the second circulator, power consumption of the signal amplification means being modified according to the intensity of the signals to be amplified,
wherein the transmitting signal detection means detects the presence of the transmitting signals from the modem by detecting whether or not the power consumption of the power modification type amplification means exceeds a prescribed power.

16. The wireless communication device according to any one of claims 1 to 6, further comprising:
receiving signal dividing means for dividing the receiving signals from the receive antenna into a plurality of signals;
divided signal amplification means for amplifying each of the plurality of divided signals divided by the receiving signal dividing means; and
divided signal combining means for combining the plurality of divided signals after amplification by the divided signal amplification means,
wherein the reception side frequency conversion means performs frequency conversion for the signals combined by the divided signal combining means.

17. The wireless communication device according to any one of claims 1 to 6, further comprising:
burst signal detection means for detecting presence of burst signals either in a transmitting signal path from the first circulator to the transmit antenna or to the second circulator, or in a receiving signal path from the receive antenna or the second circulator to the first circulator; and
signal intensity adjustment means for adjusting intensity of signals based on detection results of the burst signal detection means at a predetermined position in one of the transmitting signal path and receiving signal path located at downward side of a signal direction with respect to the burst signal detection means and/or at a predetermined position in the other of the transmitting signal path and receiving signal path.

18. The wireless communication device according to claim 17, wherein the burst signal detection means comprises:
signal attenuation means provided in a divided path from one of the transmitting signal path and receiving signal path; and
detection means for detecting presence of the burst signals based on signal levels after passing through the signal attenuation means.

19. The wireless communication device according to claim 17 or claim 18, wherein, when the burst signals are detected by the burst signal detection means, the signal intensity adjustment means adjusts signal level in one of the transmitting signal path and receiving signal path other than that in which the burst signal is detected so as to lower the signal level, and then adjusts signal level in the other of the transmitting signal path and receiving signal path so at to rise the signal level with a delay.
